# EUROPEAN PATENT APPLICATION

(11) **EP 1 925 425 A1**
(43) Date of publication of application: **28.05.2008**
(21) Application number: 06797894.0
(22) Date of filing: 13.09.2006
(51) Int. Cl.: B29C 59/04, B29C 39/20, B29C 39/42, B29L 7/00, B29L 11/00

(54) **METHOD FOR PRODUCING CONCAVE-CONVEX SHEET AND APPARATUS FOR PRODUCING CONCAVE-CONVEX SHEET**

(30) Priority: 14.09.2005 JP 2005267340; 28.10.2005 JP 2005314936
(71) Applicant: FUJIFILM Corporation, Minato-ku Tokyo 106-8620 (JP)
(72) Inventor: OGAWA, Shotaro FUJIFILM Corporation, Shizuoka 4188666 (JP); KATSUMOTO, Ryuichi FUJIFILM Corporation, Shizuoka 4188666 (JP)
(74) Representative: Klunker . Schmitt-Nilson . Hirsch
(86) International application number: PCT/JP2006/318117
(87) International publication number: WO 2007/032367

(57) **Abstract**

This invention provides an indented sheet manufacturing method and apparatus which, by virtue of the use of CO₂ gas as a gas accompanying a sheet-form body when the sheet-form body is caused to contact an indenting roller, can reduce the air-inclusion derived transfer defects of conventional techniques. Accordingly, even when the running speed of the sheet-form body is increased to improve productivity, the indented sheet having a regular pattern of fine indentations formed on a surface thereof can be manufactured with high-quality defect-free results. Further, according to the manufacturing method and apparatus of the present invention, the indented sheet having a regular pattern of fine indentations formed on a surface thereof can be manufactured with high-quality defect-free results at a high line speed and with good productivity.

## Description

### Technical Field

The present invention relates to an indented sheet manufacturing method and manufacturing apparatus, and in particular to an indented sheet manufacturing method and manufacturing apparatus suitable for manufacturing indented sheet, such as anti-reflective or other embossed sheet having a regular pattern of fine indentations formed on a surface thereof, with defect-free, high quality results at a high line-speed to give a favorable productivity.

### Background Art

In recent years, embossed sheet with anti-reflection properties has been used in electronic displays such as liquid crystal displays and the like. Embossed sheet has also been used in plate-form lenses such as lenticular lenses, and fly-eye lenses, in optical diffusing sheet, in brightness improving sheet, in optical wave-guide sheet, and in prism sheet. These types of embossed sheet, each of which has a regular pattern of fine indentations on a surface thereof, are well-known in the prior art. Various apparatuses for manufacturing indented sheet having such a regular pattern of fine indentations are conventionally known (see Patent Documents 1 through 6).

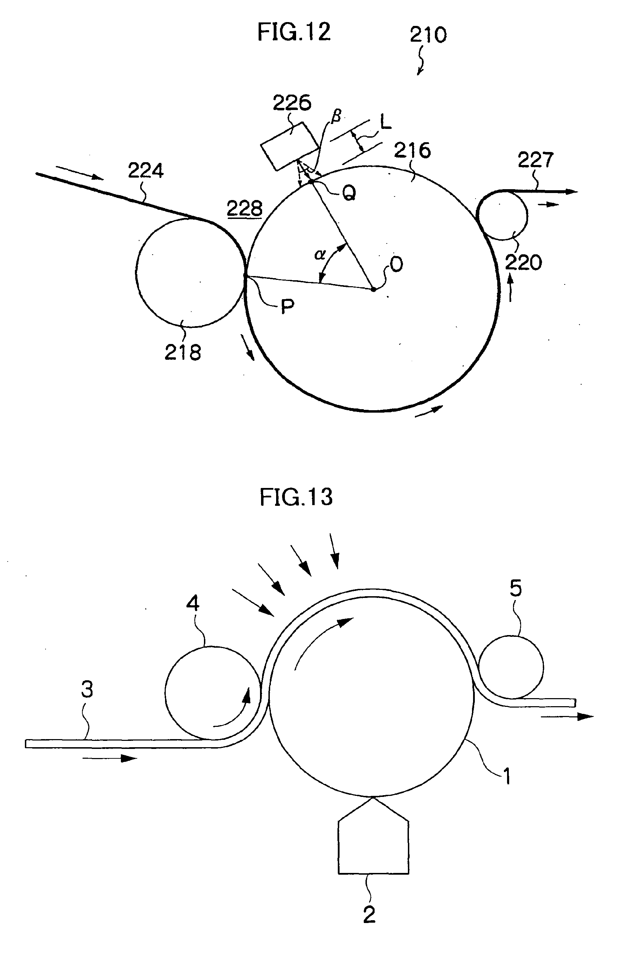

In the apparatus of the construction shown in Figure 13, for instance, an indented sheet is manufactured by coating a resin onto an indenting roller 1 having a regular pattern of indentations formed on a surface thereof, sandwiching a continuously running a sheet-form body 3 between the indenting roller 1 and a nip roller 4, curing the resin by irradiation with ionizing radiation while the sheet-form body 3 is in contact with the resin coated onto the indenting roller 1, and then detaching the sheet-form body 3 from the indenting roller 1 by winding the sheet-form body 3 onto a release roller 5 (see Patent Documents 1 through 3).

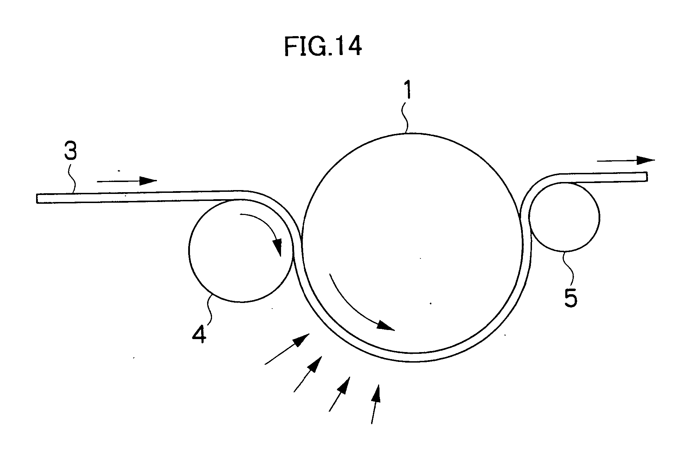

In the apparatus with the construction shown Figure 14, on the other hand, the indented sheet is manufactured by pre-forming a resin layer by coating an ionizing radiation curable resin composition onto a surface of the continuously running sheet-form body 3, sandwiching the sheet-form body 3 between the indenting roller 1 that has a regular pattern of indentations formed thereon and the nip roller 4, curing the resin layer by ionizing irradiation, and then detaching the sheet-form body 3 from the indenting roller 1 by winding the sheet-form body 3 onto the release roller 5 (see Patent Documents 3 and 4).

However, in this type of indented sheet manufacturing apparatus, a serious problem occurs in that when the manufacturing line speed is increased to improve productivity, air is pulled into the gap between the resin layer of the sheet-form body surface and the indenting roller, and the resulting bubbles in the surface of the sheet-form body cause defects.

In order to prevent such defects from occurring, Patent Document 5 discloses content relating to a manufacturing apparatus for manufacturing indented sheet by passing an uncured resin layer between an indenting roller and a nip roller. In the manufacturing apparatus, a width of the resin layer is narrower than the width of the indenting roller and a thickness of the resin layer is formed to be greater than the distance between the indenting roller and the nip roller, causing the resin making up the resin layer to build up at the meeting portion of the indenting roller and the nip roller. The resulting build-up part is then spread in a width direction, expelling air bubbles.

Patent Document 6 discloses a way of preventing the inclusion of air bubbles by coating an ionizing radiation curable resin onto the surface of the indenting roller in the form of micro bubbles with an average diameter of 10 µm to 50 µm.
Patent Document 1: Japanese Patent No. 2533379
Patent Document 2: Japanese Patent Laid-Open No. 2000-141481
Patent Document 3: Japanese Patent Laid-Open No. 2002-333508
Patent Document 4: Japanese Patent No. 3218662
Patent Document 5: Japanese Patent Laid-Open No. 11-300768
Patent Document 6: Japanese Patent Laid-Open No. 2001-62853

### Disclosure of the Invention

### Problems to be solved by the Invention

However, the indented sheet manufacturing apparatus of Patent Document 5 has shortcomings in that forming the resin build-up part at the meeting portion can destabilize the film formation, and in that it is difficult to set conditions on, for instance, the width of the resin layer and the gap between the indenting roller and the nip roller to allow the increase in the sheet-form body running speed and thereby bring about an improvement in productivity.

Moreover, the indented sheet manufacturing apparatus of Patent Document 6 has the shortcoming that the coating apparatus must be provided separately and the resin is limited to an ionizing radiation curable resin which can be formed into a mist. It is not therefore possible to freely select from among the ionizing radiation curable resins.

Furthermore, the above-described process has further serious shortcoming in that when the manufacturing line speed is increased with the intention of improving productivity, air is pulled into the gap between the cured resin film on the surface of the sheet 3 and the patterning roller 1, and the resulting air bubbles in the surface of the sheet 3 cause defects. To solve this problem, the inventions of Patent Documents 5 and 6 make use of the following measures. These measures, however, do not completely solve the problem.

For instance, the technique of the Patent Document 5 had the shortcoming that the built-up part (enlarged bead part), which is formed by a build-up of resin at the meeting portion of the rollers and forced to spread out in the width direction, can destabilize the film formation and that it becomes progressively more difficult to set conditions as the line speed is increased.

In Patent Document 6, a first curable resin is applied as a mist to the roller surface, and base material coated with a second curable resin is then caused to adhere to the roller. However, this approach has the shortcomings that the processing requires a separate coating apparatus and a material which can put into mist form (meaning that material cannot be freely selected).

The present invention was conceived in the light of the above-described circumstances with the object of providing an indented sheet manufacturing method and manufacturing apparatus suitable for manufacturing indented sheet having a regular pattern of fine indentations on a surface thereof, with defect-free, high-quality results at a high line speed to give a favorable productivity without the limitation of choice of resin. Means for Solving the Problems

To achieve the above-described object, the present invention provides an indented sheet manufacturing method including: a dispatching step of dispatching a strip-shaped flexible sheet-form body; a running step of causing the dispatched sheet-form body to run; and a transfer-forming step of causing a surface of the sheet-form body to contact a surface of an indenting roller to transfer indentations on the surface of the indenting roller to the surface of the sheet-form body, wherein in the transfer-forming step, control is performed in proximity to a portion at which the sheet-form body contacts the indenting roller so as to lower a proportion of air in a gas accompanying the sheet-form body to below a normal atmospheric level.

The present invention further provides an indented sheet manufacturing apparatus including: a dispatching unit operable to dispatch a strip-shaped flexible sheet-form body; a running unit operable to cause the dispatched sheet-form body to run; and a transfer-forming unit operable to cause a surface of the sheet-form body to contact a surface of an indenting roller to transfer indentations on the surface of the indenting roller to the surface of the sheet-form body; and a control unit operable to perform control to reduce a proportion of air in a gas accompanying the sheet-form body in proximity to a portion at which the sheet-form body contacts the indenting roller to below a normal atmospheric level.

The indented sheet manufacturing method of the present invention may further include a coating step of coating a resin solution onto the surface of the sheet-form body to form a resin solution layer, wherein in the transfer-forming step, the control is performed by increasing, when the surface side of the sheet-form body, onto which the resin solution is coated is caused to contact the indenting roller, a CO₂ gas concentration in the gas accompanying the sheet-form body to above a CO₂ gas concentration in normal atmospheric air.

The indented sheet manufacturing apparatus of the present invention may further include a coating unit operable to coat a resin solution onto the surface of the sheet-form body to form a resin solution layer, wherein the control unit performs the control by increasing, when the surface side of the sheet-form body, onto which the resin solution is coated is caused to contact the indenting roller, a CO₂ gas concentration in the gas accompanying the sheet-form body to above a CO₂ gas concentration in normal atmospheric air.

The above-described aspect of the present invention is hereinafter referred to as a "first aspect".

In the indented sheet manufacturing method of the present invention, the sheet-form body is formed from a thermoplastic, and the indented sheet manufacturing method may further include a heating step of heating at least one surface of the sheet-form body formed from the thermoplastic, wherein in the transfer-forming step, the control is performed by increasing, when a heated surface side or non-heated surface side of the sheet-form body is caused to contact the indenting roller, a CO₂ gas concentration in the gas accompanying the sheet-form body to above a CO₂ gas concentration in normal atmospheric air.

In the indented sheet manufacturing apparatus of the present invention, the sheet-form body is formed from a thermoplastic, and the indented sheet manufacturing apparatus may further include a heating unit operable to heat at least one surface of the sheet-form body formed from the thermoplastic, wherein the control unit performs the control by increasing, when a heated surface side or non-heated surface side of the sheet-form body is caused to contact the indenting roller, a CO₂ gas concentration in the gas accompanying the sheet-form body to above a CO₂ gas concentration in normal atmospheric air.

The above-described aspect of the present invention is hereinafter referred to as a "second aspect".

The indented sheet manufacturing method of the present invention may further include a forming step of forming the sheet-form body by extruding a thermoplastic into sheet-form using an extruder, wherein in the transfer-forming step, the control is performed by increasing, when the sheet-form body is caused to contact the indenting roller, a CO₂ gas concentration in the gas accompanying the sheet-form body to above a CO₂ gas concentration in normal atmospheric air.

The indented sheet manufacturing apparatus of the present invention may further include an extruder operable to form the sheet-form body by extruding a thermoplastic into sheet-form, wherein the control unit performs the control by increasing, when the sheet-form body is caused to contact the indenting roller, a CO₂ gas concentration in the gas accompanying the sheet-form body to above a CO₂ gas concentration in normal atmospheric air.

The above-described aspect of the present invention is referred to hereinafter as a "third aspect".

The indented sheet manufacturing method of the present invention may further include: a coating step of coating a resin solution onto the surface of the sheet-form body to form a resin solution layer; and a step of curing the resin solution layer with the sheet-form body in a state of being wound around the indenting roller, wherein in the transfer-forming step, the sheet-form body is pressed between the indenting roller and at least one nip roller provided opposing the indenting roller, and the indentations on the surface of the indenting roller are transferred to the resin solution layer while performing the control by increasing, when the sheet-form body is caused to contact the indenting roller, a CO₂ gas concentration in the gas accompanying the sheet-form body to above a CO₂ gas concentration in normal atmospheric air.

The indented sheet manufacturing apparatus of the present invention may further include: a coating unit operable to coat a resin solution onto the surface of the sheet-form body to form a resin solution layer; and a resin solution curing unit operable to cure the coated resin solution with the sheet-form body in a state of being wound around the indenting roller, wherein the control unit performs the control by increasing, when the sheet-form body is caused to contact the indenting roller, a CO₂ gas concentration in the gas accompanying the sheet-form body to above a CO₂ gas concentration in normal atmospheric air, and the transfer-forming unit, while winding the running sheet-form body around the rotating indenting roller, presses the sheet-form body between the indenting roller and at least one nip roller provided opposing the indenting roller and transfers the indentations on the surface of the indenting roller to the resin solution layer of the sheet-form body.

The above-described aspect of the present invention is hereinafter referred to as a "fourth aspect".

The first aspect of the present invention applies to an indented sheet manufacturing method and apparatus for manufacturing indented sheet by running a sheet-form body having a resin layer formed on a surface thereof through an indenting roller. The second aspect of the present invention applies to an indented sheet manufacturing method and apparatus for manufacturing indented sheet by heating a thermoplastic sheet-form body and running the sheet-form body through the indenting roller. The third aspect of the present invention applies to an indented sheet manufacturing method and apparatus for manufacturing indented sheet by extruding a thermoplastic into sheet-form using an extruder to form a sheet-form body and running the sheet-form body through the indenting roller. The fourth aspect of the present invention applies to an indented sheet manufacturing method and apparatus for manufacturing indented sheet by continuously running a strip-shaped flexible sheet-form body having a resin solution coated onto a surface thereof between an indenting roller and a nip roller. The first through fourth aspects are characterized by the use of CO₂ gas as the gas accompanying the sheet-form body when the sheet-form body is caused to contact the indenting roller.

According to the first through fourth aspects of the present invention, CO₂ gas is used as the gas accompanying the sheet-form body when the sheet-form body is caused to contact the indenting roller. Hence, even in circumstances where CO₂ gas enters between the indenting roller and the sheet-form body and forms a gas pocket, the CO₂ gas dissolves/diffuses in the sheet-form body and the resin. Hence, the problem is solved without adversely affecting the transfer accuracy. Other than CO₂ gas, it is possible to use gases such as Freon gas and propane gas which have good permeability properties with respect to the resin. However, CO₂ gas is preferable from the point of view of avoiding environmental problems (e.g. with Freon gas), safety problems (e.g. with propane gas), and the like. With the above-described arrangement, when CO₂ gas is carried to the meeting portion of the sheet-form body and the indenting roller together with the sheet-form body, conventionally occurring transfer defects caused by the inclusion of air are reduced because the CO₂ gas permeates through the sheet-form body and the resin. Therefore, according to the first through fourth aspects, even if the running speed of the sheet-form body is increased to improve productivity, it is possible to manufacture the indented sheet having a regular pattern of fine indentations formed on a surface thereof with defect-free, high-quality results. The first through fourth aspects have a further advantage in that the ionizing radiation curable resin is not misted in the manner of Patent Document 6, and the choice of ionizing radiation curable resin is therefore widened.

In the indented sheet manufacturing method of the first through fourth aspects of the present invention, the CO₂ gas may be blown at the meeting portion of the indenting roller and the sheet-form body.

The indented sheet manufacturing apparatus of the first through fourth aspects of the present invention may be provided with a gas jet emitting unit operable to blow CO₂ gas at meeting portion of the indenting roller and the sheet-form body.

According to the above-described aspects, since the CO₂ gas is blown at the meeting portion of the indenting roller and the sheet-form body using the gas jet emitting unit, there is no need to form a gas atmosphere around the entire apparatus and, consequently, initial costs can be reduced.

Note that in the present invention, the "indenting roller" includes not only the embossing roller which is a columnar roller having an indentation pattern (embossing pattern) formed on a surface thereof, but also a strip-shaped body, such as an endless belt, having an indentation pattern (embossing pattern) formed on a surface thereof. When a strip-shaped body is used, the indenting roller operates in the same manner as the columnar embossing roller, and the same effects are achieved.

In the indented sheet manufacturing method and apparatus of the fourth aspect, the resin of the resin layer is a radiation curable resin, and the resin layer is preferably cured by irradiating the resin layer. The use of this type of radiation curable resin simplifies the curing of the resin. Note that the radiation curable resin is described in detail in a later section. The resin coating is preferably applied by an extrusion-type hopper or a slide-type hopper. This type of coating method is suitable for the resin coating of the present invention.

The indented sheet manufacturing method of the present invention may further include: a step of coating a resin solution onto the surface of the sheet-form body to form a resin solution layer, wherein in the transfer-forming step, the sheet-form body is pressed between the indenting roller and at least one nip roller provided opposing the indenting roller and indentations on the surface of the indenting roller are transferred to the resin solution layer while performing the control by sucking gas from between the indenting roller and the sheet-form body.

The indented sheet manufacturing apparatus of the present invention may further include a coating unit operable to coat a resin solution onto the surface of the sheet-form body to form a resin solution layer, wherein the control unit is a suction unit provided on an upstream side of the indenting roller and is operable to perform the control by sucking gas from between the indenting roller and the sheet-form body, and the transfer-forming unit presses the sheet-form body between the indenting roller and at least one nip roller provided opposing the indenting roller and transfers indentations on the surface of the indenting roller to the resin solution layer of the sheet-form body while gas is sucked from between the indenting roller and the sheet-form body by the suction unit.

The above-described aspect of the present invention is hereinafter referred to as a "fifth aspect".

In the indented sheet manufacturing method of the present invention, the sheet-form body is formed from a thermoplastic, and the indented sheet manufacturing method may further include: a heating step of heating at least one surface of the sheet-form body formed from the thermoplastic, wherein in the transfer-forming step, the sheet-form body is pressed between the indenting roller and at least one nip roller provided opposing the indenting roller, and indentations on the surface of the indenting roller are transferred to the resin solution layer while performing the control by sucking gas from between the indenting roller and the sheet-form body.

In the indented sheet manufacturing apparatus of the present invention, the sheet-form body is formed from a thermoplastic, and the indented sheet manufacturing apparatus may further include: a heating unit operable to heat at least one surface of the sheet-form body formed from the thermoplastic, wherein the control unit is a suction unit provided on an upstream side of the indenting roller and is operable to perform the control by sucking gas from between the indenting roller and the sheet-form body, and the sheet-form body is pressed between the indenting roller and at least one nip roller provided opposing the indenting roller, and indentations on the surface of the indenting roller are transferred to the resin solution layer while performing the control by sucking gas from between the indenting roller and the sheet-form body using the suction unit.

The above-described aspect of the present invention is referred to hereinafter as a "sixth aspect".

The indented sheet manufacturing method of the present invention may further include: a step of coating a resin solution onto the surface of the sheet-form body to form a resin solution layer; and a step of curing the resin solution layer with the sheet-form body in a state of being wound around the indenting roller, wherein in the transfer-forming step, the sheet-form body is pressed between the indenting roller and at least one nip roller provided opposing the indenting roller, and indentations on the surface of the indenting roller are transferred to the resin solution layer while performing the control by sucking gas from between the indenting roller and the sheet-form body.

The indented sheet manufacturing apparatus of the present invention may further include: a coating unit operable to coat a resin solution onto the surface of the sheet-form body to form a resin solution layer; and a resin solution curing unit operable to cure the coated resin solution with the sheet-form body in a state of being wound around the indenting roller, wherein the control unit is a suction unit provided on an upstream side of the indenting roller and is operable to perform the control by sucking gas from between the indenting roller and the sheet-form body, and the sheet-form body is pressed between the indenting roller and at least one nip roller provided opposing the indenting roller, and indentations on the surface of the indenting roller are transferred to the resin solution layer while performing the control by sucking gas from between the indenting roller and the sheet-form body using the suction unit.

The above-described aspect of the present invention is referred to hereinafter as a "seventh aspect".

According to the seventh aspect of the present invention, at manufacture of the indented sheet by transferring indentations on the surface of the indenting roller to the surface of a sheet-form body, the indentations on the surface of the indenting roller are transferred to the resin solution layer while gas is sucked from between the indenting roller and the sheet-form body, and the resin solution layer is cured in the indented state. The indentations are transferred while sucking gas from between the indenting roller and the sheet-form body in this way, thereby solving the problem of defects caused by air bubbles resulting from the inclusion of air.

Hence, according to the seventh aspect, it is possible to manufacture the indented sheet having a regular pattern of fine indentations formed on a surface thereof with defect-free high-quality results at a high line speed to give favorable productivity.

Note that in the present invention, the term "indenting roller" includes not only the embossing roller which is a columnar roller having an indentation pattern (embossing pattern) formed on a surface thereof, but also a strip-shaped body, such as an endless belt, having an indentation pattern (embossing pattern) formed on a surface thereof. When a strip-shaped body is used, the operations are similar to those of the columnar embossing roller, and the same effects are achieved.

The indented sheet manufacturing method of the present invention may further include a coating step of coating a resin solution onto the surface of the sheet-form body to form a resin solution layer, wherein indentations on the surface of the indenting roller are transferred to the resin solution layer while introduction of air between the indenting roller and the sheet-form body is prevented by a wind-blocking member provided on an upstream side of the indented roller.

The indented sheet manufacturing apparatus of the present invention may further include: a coating unit operable to coat a resin solution onto the surface of the sheet-form body to form a resin solution layer; and a wind-blocking member provided on an upstream side of the indenting roller, wherein indentations on the surface of the indenting roller are transferred to the resin solution layer while introduction of gas between the indenting roller and the sheet-form body is prevented by the wind-blocking member.

The above-described aspect of the present invention is hereinafter referred to as an "eighth aspect".

According to the eighth aspect of the present invention, at manufacture of the indented sheet by transferring indentations on the surface of the indenting roller, a wind-blocking member is provided on an upstream side of the indenting roller, the indentations on the surface of the indenting roller are transferred to the resin solution layer while preventing gas from being sucked from between the indenting roller and the sheet-form body, and the resin solution layer is cured in the indented state. The indentations are transferred while preventing gas from being introduced between the indenting roller and the sheet-form body in this way, thereby solving the problem of defects caused by air bubbles resulting from the inclusion of air.

Hence, according to the eighth aspect, it is possible to manufacture the indented sheet having a regular pattern of fine indentations formed on a surface thereof with defect-free high-quality results at a high line speed to give a favorable productivity.

In the indented sheet manufacturing method of the present invention, the sheet-form body is formed from a thermoplastic, and the indented sheet manufacturing method may further include a heating step of heating at least one surface of the sheet-form body formed from the thermoplastic, wherein indentations on the surface of the indenting roller are transferred to the resin solution layer while introduction of gas between the indenting roller and the sheet-form body is prevented by a wind-blocking member provided on an upstream side of the indented roller.

In the indented sheet manufacturing apparatus of the present invention, the sheet-form body is formed from a thermoplastic, and the indented sheet manufacturing apparatus may further include: a heating unit operable to heat at least one surface of the sheet-form body formed from the thermoplastic; and a wind-blocking member provided on an upstream side of the indenting roller, wherein indentations on the surface of the indenting roller are transferred to the resin solution layer while introduction of gas between the indenting roller and the sheet-form body is prevented by the wind-blocking member.

The above-described aspect of the present invention is referred to hereinafter as a "ninth aspect".

The indented sheet manufacturing method of the present invention may further include a coating step of coating a resin solution onto the surface of the sheet-form body to form a resin solution layer; and a step of curing the resin solution layer with the sheet-form body in a state of being wound around the indenting roller, wherein indentations on the surface of the indenting roller are transferred to the resin solution layer while introduction of gas between the indenting roller and the sheet-form body is prevented by the wind-blocking member.

The indented sheet manufacturing apparatus of the present invention may further include: a coating unit operable to coat a resin solution onto the surface of the sheet-form body to form a resin solution layer; a resin solution curing unit operable to cure the coated resin solution with the sheet-form body in a state of being wound around the indenting roller; and a wind-blocking member provided on an upstream side of the indenting roller, wherein indentations on the surface of the indenting roller are transferred to the resin solution layer while introduction of gas between the indenting roller and the sheet-form body is prevented by the wind-blocking member.

The above-described aspect of the present invention is hereinafter referred to as a "tenth aspect".

In the fourth, seventh and tenth aspects, the resin solution is a radiation curable resin solution, and the resin solution layer may be cured by irradiating the resin solution layer. The use of this type of radiation curable resin solution simplifies the curing of the resin. Here, the curing by irradiation of the resin solution layer may be performed by an irradiating unit provided in proximity to the indenting roller.

Further, in the aspects of the above-described present invention, an indentation pattern formed by transfer to the sheet-form body may have a pitch of 100 µm or less. Further, in the aspects of the above-described present invention, the indented sheet may be used as an optical film.

### Advantages of the Invention

Since, according to the present invention, CO₂ gas is used in the manner described above as the gas accompanying the sheet-form body when the sheet-form body is caused to contact the indented roller, it is possible to reduce the number of transfer defects which occur as a result of the inclusion of air in conventional techniques. Hence, even when the running speed of the sheet-form body is increased in order to improve productivity, the indented sheet with the regular pattern of fine indentations formed on a surface thereof can be manufactured with defect-free, high-quality results.

According to the present invention, it is possible to manufacture the indented sheet having a regular pattern of fine indentations formed on a surface thereof with defect-free high-quality results at a high line speed to give a favorable productivity.

### Brief Description of the Drawings

Figure 1 is a schematic showing a construction of an indented sheet manufacturing apparatus according to the present invention;
Figure 2 is a cross-sectional drawing of an embossing roller used in the manufacturing apparatus of Figure 1;
Figure 3 is a cross-sectional drawing of manufactured indented sheet;
Figure 4 is a table showing a resin composition which has been coated onto a sheet-form body;
Figure 5 is a table showing manufacturing specifications for the indented sheet;
Figure 6 is a schematic showing a construction of an embossed sheet manufacturing apparatus according to the present invention;
Figure 7 is a side elevation illustrating a suction unit provided in a resin sheet manufacturing apparatus of the present invention;
Figure 8 is a cross-sectional drawing showing a concept of an embossing roller;
Figure 9 is a cross-sectional drawing showing a concept of an embossed sheet;
Figure 10 is a side elevation illustrating a wind-blocking plate provided in a resin sheet manufacturing apparatus of the present invention;
Figure 11 is a side elevation illustrating a wind-blocking roller provided in the resin sheet manufacturing apparatus of the present invention;
Figure 12 is a schematic showing an example of a case in which accompanying gas is blocked using a curtain formed by emitting a jet of CO₂ gas;
Figure 13 is a schematic showing a construction of a conventional embossed sheet manufacturing apparatus; and
Figure 14 is a schematic showing a further construction of a conventional embossed sheet manufacturing apparatus.

### Description of Symbols

- 10: embossed sheet manufacturing apparatus
- 11: sheet supplying apparatus
- 12: coating apparatus
- 13: embossing roller
- 14: nip roller
- 15: resin curing apparatus
- 16: detaching roller
- 17: protective film supplying apparatus
- 18: sheet winding apparatus
- 19: drying apparatus
- 20: carbon dioxide supplying apparatus
- 21: CO₂ gas supply source
- 22: nozzle
- 23: meeting portion
- H: protective film
- W: sheet
- 100: embossed sheet manufacturing apparatus
- 111: sheet supplying unit
- 112: coating unit
- 113: embossing roller
- 114: nip roller
- 115: resin curing unit
- 116: detaching roller
- 117: protective film supplying unit
- 118: sheet winding unit
- 122: suction unit
- 134: wind-blocking plate
- 136: wind-blocking roller
- 210: embossed sheet manufacturing apparatus
- 216: embossing roller
- 218: nip roller
- 220: detaching roller
- 226: gas discharging nozzle

### Best Mode for Carrying Out the Invention

The following describes preferable embodiments of the indented sheet manufacturing method and apparatus of the present invention based on the accompanying drawings. Note that the embodiments of the present invention are not limited to the examples described below and any embodiment constructed based on the aspects described in the above "Means for Solving the Problems" can be used.

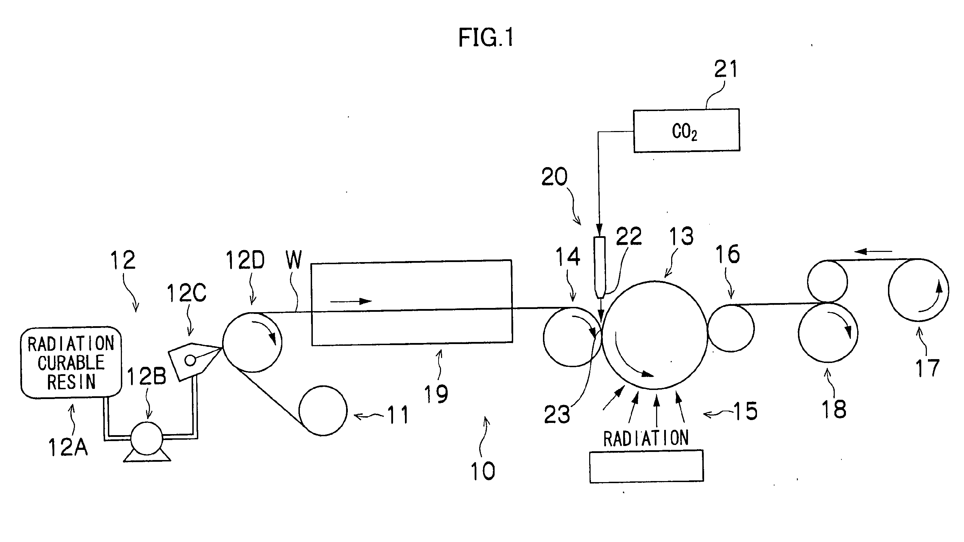

Figure 1 is a schematic showing a construction of a first embodiment of an embossed sheet manufacturing apparatus according to the present invention. The embossed sheet manufacturing apparatus 10 is constructed from a sheet-form body supplying apparatus (feeding unit) 11, a coating apparatus 12, an embossing roller (indenting roller) 13, a nip roller 14, a resin curing apparatus 15, a detaching roller 16, a protective film supplying apparatus 17, a sheet winding apparatus 18, a drying apparatus 19, a CO₂ gas supplying apparatus 20, and the like.

The sheet supplying apparatus 11 feeds a sheet (sheet-form body) W, and is therefore constructed to include a feeding roll with the sheet W wound thereon.

The coating apparatus 12 is an apparatus for coating a radiation curable resin (coating solution) onto a surface of the sheet W, and is constructed from a tank 12A which holds the radiation curable resin, a supply apparatus (pump) 12B, a coating head 12C, a support roller 12D around which the sheet W is wound for support during the coating, and pipe-work from the tank 12A to the coating head 12C. Note that an extrusion-type die coater head is used as the coating head 12C shown in Figure 1.

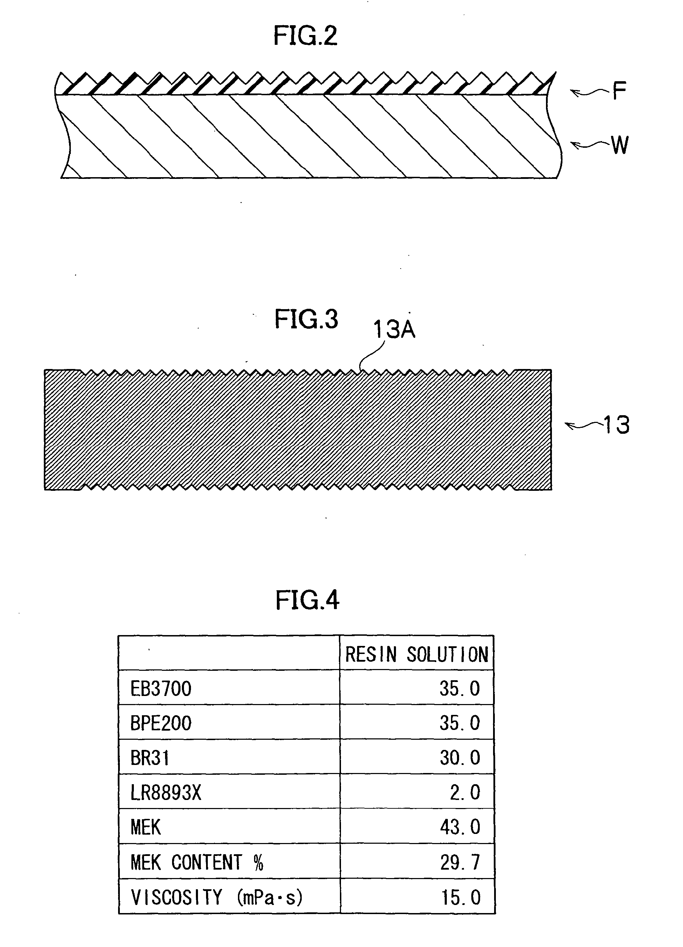

The drying apparatus 19 is provided between the coating apparatus 12 and the embossing roller 13. The drying apparatus 19 has been constructed in the form of a tunnel as shown in Figure 1, but any of a number of known methods which allow uniform drying of a coating solution F coated on the sheet W in the manner shown in Figure 2 may be used. For instance, electromagnetic radiation heating method using a heater, a convection heating method, or a vacuum method may be used.

The embossing roller 13 of Figure 1 is required to be capable of transferring the indentations of the roller surface to the surface of the sheet W, and have a certain accuracy in indentation patterns, a certain mechanical strength, a certain circularity, and the like. It is therefore preferable that the embossing roller 13 is metal roller.

As shown in Figure 3, an external circumferential surface 13A of the embossing roller 13 has a regular pattern of fine indentations formed thereon. This regular pattern of fine indentations is required to be the reverse of a pattern of fine indentations on the surface of the embossed sheet which is the commercial product.

The commercial product making use of the embossed sheet may include a fine pattern of indentations which may be a two-dimensional array of lenticular lenses or prism lenses, or a three dimensional array of, for instance, fly-eye lenses, or flat plate lenses made up of conical, pyramidal or other fine conical bodies laid out in the XY direction. The regular pattern of fine indentations on the external circumferential surface 13A of the embossing roller 13 is arranged to correspond to the target pattern on the product.

To form the regular pattern of fine indentations on the external circumferential surface 13A of the embossing roller 13, it is possible to use a diamond bit (single point) method to cut the surface of the embossing roller 13, or a method which forms the indentations directly through use of photoetching, electron beam lithography, or laser processing on the surface of the embossing roller 13. Alternatively, it is possible to use a method in which indentations are formed on the surface of a thin metal plate-form body using photoetching, electron beam lithography, laser processing, stereolithography, or the like, and the plate-form body is wound around and fixed to the roller to form the embossing roller 13. Alternatively, it is possible to use a method in which indentations are formed on the surface of a material more easily processed than metal using photoetching, electron beam lithography, laser processing, stereolithography, or the like, a thin metal plate-form body is manufactured using a reverse mold of the indentations formed by electroforming or the like, and the plate-form body is wound around and fixed to the roller to form the embossing roller 13. The case in which the reverse mold is formed by electroforming or the like has the particular advantage that a plurality of identical plate-form bodies can be obtained using a single original (mother).

It is preferable that demolding processing is performed at the surface (external circumferential surface) of the embossing roller 13. Performing the demolding processing at the surface of the embossing roller 13 allows the fine pattern of indentations to be favorably maintained. Any of a number of well-known methods can be used for the demolding processing. One such method makes use of coating processing with a fluoropolymer. Note that it is preferable that the embossing roller 13 is provided with a driving unit. The embossing roller 13 rotates counter-clockwise (CCW) as shown by the arrow in the drawings.

The nip roller 14 shown in Figure 1 is paired with the embossing roller 13 and acts to apply a force to the sheet W during the roller processing. The nip roller 14 is therefore required to have a predetermined mechanical strength, a predetermined circularity, and the like. If a longitudinal elastic modulus (Young's Modulus) of the surface of the nip roller 14 is too small, the roller processing will not be sufficiently effective. If, on the other hand, the longitudinal elastic modulus is too large, the process becomes sensitive to the inclusion of foreign matter such as debris. It is preferable, therefore, that a suitable value for the longitudinal elastic modulus is selected. It is also preferable that the nip roller 14 is provided with a driving unit. The nip roller 14 rotates clockwise (CW) as shown by the arrow in the drawings.

In order to apply a predetermined pressing force to between the embossing roller 13 and the nip roller 14 one of the embossing roller 13 and the nip roller 14 is preferably provided with a force applying unit. Similarly, one of the embossing roller 13 and the nip roller 14 is preferably provided with a fine adjustment unit to allow the pressing force and the gap (clearance) between the embossing roller 13 and the nip roller 14 to be accurately controlled.

The resin curing apparatus 15 is an irradiating apparatus provided opposite the embossing roller 13 on a downstream side of the nip roller 14. The resin curing apparatus 15 cures the resin layer through the sheet W by irradiation, and is preferably capable of performing irradiation in a manner appropriate to the curing properties of the resin and with an amount of radiation appropriate for the speed at which the sheet W is being conveyed. For the resin curing apparatus 15, a columnar irradiating lamp with a length approximately the same as the width of the sheet W can be used. Alternatively, a plurality of columnar irradiating lamps can be provided in parallel, and a reflecting plate can be provided on a back surface of each columnar irradiating lamp.

The detaching roller 16 is paired with the embossing roller 13, and operates to detach the sheet W from the embossing roller 13. The detaching roller 16 is therefore required to have a predetermined mechanical strength, a predetermined circularity, and the like. At a point of detachment, the sheet W that is wound around the circumferential surface of the embossing roller 13 becomes sandwiched between the rotating embossing roller 13 and the detaching roller 16. The sheet W is thereby detached from the embossing roller 13, and wound onto the detaching roller 16. To ensure that this operation is performed reliably, it is preferable that the detaching roller 16 is provided with a driving apparatus. The detaching roller 16 rotates clockwise (CW) as shown by the arrow in the drawings.

Note that when the temperature is raised by the curing of the resin or the like, the detaching roller 16 can be provided with a cooling apparatus to cool the sheet W during the detachment and thereby ensure a reliable detachment.

Although not shown in the drawings, a construction in which a plurality of back-up rollers are provided opposing the embossing roller 13 between a pressing point (located at 9 o'clock) and a detachment point (located at 3 o'clock) on the embossing roller 13 can be used. In such a construction, curing is performed while applying a pressing force to the sheet W using the plurality of back-up rollers and the embossing roller 13.

The sheet winding apparatus 18 is an arrangement for storing the sheet W after detachment, and is constructed from a winding roller which winds the sheet W. In the sheet winding apparatus 18, a protective film H supplied by an adjacently provided protective film supplying apparatus 17 is supplied to the surface of the sheet W, and the sheet W with the protective film H layered thereon is collected by the sheet winding apparatus 18.

In the embossed sheet manufacturing apparatus 10, guide rollers forming a conveying path for the sheet W may be provided between the coating apparatus 12 and the embossing roller 13, between the detaching roller 16 and the sheet winding apparatus 18 and elsewhere. Besides the guide rollers, tension rollers or the like can be provided where necessary to take up any slack in the sheet W as the sheet W is conveyed.

The CO₂ gas supplying apparatus 20 is constructed from a CO₂ gas supply source 21 and a nozzle 22. The nozzle 22 is disposed over the nip roller 14, and CO₂ gas is blown from the CO₂ gas supply source 21 towards the meeting portion 23 of the sheet W and the embossing roller 13.

The following gives names of the materials applied in the present invention. A number of well-known materials can be used as the sheet W. These include resin film, paper (e.g. resin coated paper or composite paper), metal foil (e.g. aluminum webbing) or the like. Various well-known materials can be used as the resin film, including polyethylene, polypropylene, polyvinyl chloride, polyvinylidene chloride, polyvinyl acetate, polyester, polyolefin, acryl, polystyrene, polycarbonate, polyamide, PET (polyethylene terephthalate), biaxially orientated polyethylene terephthalate, polyethylene naphthalate, polyamide-imide, polyimide, aromatic polyamide, cellulose acylate, cellulose triacetate, cellulose acetate propionate, and cellulose diacetate. Of the above, the use of polyester, cellulose acylate, acryl, polycarbonate, or polyolefin is particularly preferable. Note that the first embodiment of the sheet W is made of polycarbonate which is highly permeable to CO₂ gas.

Generally, the width of the sheet W is 0.1 m to 3 m, the length of the sheet W is 1000 m to 100000 m, and the thickness of the sheet W is 1 µm to 300 µm. Note, however, that the invention may be applied to sizes outside the described ranges.

The sheet W may undergo advance-processing such as corona discharging, plasma treatment, treatment for easy adhesion, heat treatment, dust removal treatment, or the like. It is preferable that a surface roughness Ra of the sheet W is 3 nm to 10 nm at a cut-off length of 0.25 mm.

The sheet W may make use of an undercoat layer such as an adhesive layer that has been cured by drying, or other functional layers formed on the underside surface. Similarly, the sheet W is not limited to having a single layer and may be composed of two or more layers. Moreover, the sheet W is preferably a transparent or semitransparent body which is permeable to light.

Resins usable in the present invention include a reactive group-containing compound such as a (meth)acroyl group, a vinyl group, or an epoxy group, and a compound that generates active particles such as radicals and cations to react with the reactive group-containing compound by irradiation with ultra-violet light. From the point of view of the curing rate, it is preferable to use a combination of a reactive group-containing compound (monomer) which contains an unsaturated group such as the (meth)acroyl group or the vinyl group and a radical photo initiator which generates radicals when irradiated with light. The reactive group-containing compound is preferably a (meth)acroyl group-containing compound such as (meth)acrylate, urethane (meth)acrylate, epoxy (meth)acrylate, or polyester(meth) acrylate. A compound including one, two or more (meth)acroyl groups can be used as the (meth)acroyl group-containing compound. The reactive group-containing compound (monomer) which contains an unsaturated group such as the acroyl group or vinyl group may be a single compound or a mixture of compounds as required.

Such (meth)acroyl group-containing compounds include monofunctional monomers which contain a single (meth)acroyl group-containing compound. Examples of such monofunctional monomers include isobornyl (meth)acrylate, bornyl (meth)acrylate, tricyclodecanyl (meth)acrylate, dicyclopentanyl (meth)acrylate, dicyclopentenyl (meth)acrylate, cyclohexyl (meth)acrylate, benzyl (meth)acrylate, 4-butyl cyclohexyl (meth)acrylate, acryloyl morpholine, 2-hydroxyethyl (meth)acrylate, 2-hydroxypropyl (meth)acrylate, 2-hydroxybutyl (meth)acrylate, methyl (meth)acrylate, ethyl (meth)acrylate, propyl (meth)acrylate, isopropyl (meth)acrylate, butyl (meth)acrylate, amyl (meth)acrylate, isobutyl (meth)acrylate, t-butyl (meth)acrylate, pentyl (meth)acrylate, isoamyl (meth)acrylate, hexyl (meth)acrylate, heptyl (meth)acrylate, octyl (meth)acrylate, isooctyl (meth)acrylate, 2-ethylhexyl (meth)acrylate, nonyl (meth)acrylate, decyl (meth)acrylate, isodecyl (meth)acrylate, undecyl (meth)acrylate, dodecyl (meth)acrylate, lauryl (meth)acrylate, stearyl (meth)acrylate, isostearyl (meth)acrylate, tetrahydrofurfuryl (meth)acrylate, butoxyethyl (meth)acrylate, ethoxy diethyleneglycol (meth)acrylate, polyethyleneglycol mono(meth)acrylate, polypropyleneglycol mono(meth)acrylate, methoxy ethyleneglycol (meth)acrylate, ethoxyethyl (meth)acrylate, methoxy polyethyleneglycol (meth)acrylate, and methoxy polypropyleneglycol (meth)acrylate.

Further, monofunctional monomers having aromatic rings include phenoxyethyl (meth)acrylate, phenoxy-2-methylethyl (meth)acrylate, phenoxyethoxyethyl (meth)acrylate, 3-phenoxy-2-hydroxypropyl (meth)acrylate, 2-phenylphenoxyethyl (meth)acrylate, 4-phenylphenoxyethyl (meth)acrylate, 3-(2-phenylphenyl)-2-hydroxypropyl (meth)acrylate, ethyleneoxide-reacted p-cumylphenol (meth)acrylate, 2-bromophenoxyethyl (meth)acrylate, 4-bromophenoxyethyl (meth)acrylate, 2,4-dibromophenoxyethyl (meth)acrylate, 2,6-dibromophenoxyethyl (meth)acrylate, 2,4,6-tribromophenyl (meth)acrylate, and 2,4,6-tribromophenoxyethyl (meth)acrylate.

There are various commercially available monofunctional monomers having an aromatic ring, including Aronix M113, M110, M101, M102, M5700 and TO-1317 (manufactured by Toagosei Co., Ltd.), Viscoat #192, #193, #220, and 3BM (manufactured by Osaka Organic Chemical Ind., Ltd.), NK Ester AMP-10G, and AMP-20G (manufactured by Shin-Nakamura Chemical Co., Ltd.), Light Acrylate PO-A, P-200A, Epoxy Ester M-600A, and Light Ester PO (manufactured by Kyoeisha Chemical Co., Ltd.), and New Frontier PHE, CEA, PHE-2, BR-30, BR-31, BR-31M, and BR-32 (manufactured by Dai-Ichi Kogyo Seiyaku Co., Ltd.).

Unsaturated monomers containing two (meth)acroyl groups in the molecule include alkyldiol diacrylates such as 1,4-butanediol diacrylate, 1,6-hexanediol diacrylate, 1,9-nonanediol diacrylate, and polyalkylene glycol diacrylates such as ethyleneglycol di(meth)acrylate, tetraethyleneglycol diacrylate, and tripropyleneglycol diacrylate. Other such unsaturated monomers include neopentylglycol di(meth)acrylate, and tricyclodecane methanol diacrylate.

Examples of unsaturated monomers having a bisphenol skeleton include ethylene oxide adduct of bisphenol A (meth)acrylic acid ester, ethylene oxide adduct of tetrabromobisphenol A (meth)acrylic acid ester, propylene oxide adduct of bisphenol A (meth)acrylic acid ester, propylene oxide adduct of tetrabromobisphenol A (meth)acrylic acid ester, bisphenol A epoxy (meth)acrylate obtained using an epoxy ring-opening reaction of bisphenol A diglycidyl ether with (meth)acrylic acid, tetrabromobisphenol A epoxy (meth)acrylate obtained using an epoxy ring-opening reaction of tetrabromobisphenol A diglycidyl ether with (meth)acrylic acid, bisphenol F epoxy (meth)acrylate obtained using an epoxy ring-opening reaction of bisphenol F diglycidyl ether with (meth)acrylic acid, and tetrabromobisphenol F epoxy (meth)acrylate obtained by an epoxy ring-opening reaction of tetrabromobisphenol F diglycidyl ether with (meth)acrylic acid.

There are various commercially available unsaturated monomers with this type of structure, including Viscoat #700 and #540 (manufactured by Osaka Organic Chemical Ind., Ltd.), Aronix M-208 and M-210 (manufactured by Toagosei Co., Ltd.), NK Ester BPE-100, BPE-200, BPE-500 and A-BPE-4 (manufactured by Shin-Nakamura Chemical Co., Ltd.), Light Ester BP-4EA, BP-4PA and Epoxy Ester 3002M, 3002A, 3000M, and 3000A (manufactured by Kyoeisha Chemical Co., Ltd.), KAYARAD R-551 and R-712 (manufactured by Nippon Kayaku Co., Ltd.), BPE-4, BPE-10 and BR-42M (manufactured by Dai-Ichi Kogyo Seiyaku Co., Ltd.), Ripoxy VR-77, VR-60, VR-90, SP-1506, SP-1506, SP-1507, SP-1509 and SP-1563 (manufactured by Showa Highpolymer Co., Ltd.), and Neopole V779 and Neopole V779MA (manufactured by Japan U-PiCA Co., Ltd.).

Examples of (meth)acrylate unsaturated monomers having three or more functional groups include (meth)acrylates of an alcohol having three or more hydroxyl groups such as trimethylolpropane tri(meth)acrylate, pentaerythritol tri(meth)acrylate, trimethylolpropane trioxyethyl(meth)acrylate, and tris(2-acryloyloxyethyl)isocyanurate. Commercially available examples include Aronix M305, M309, M310, M315, M320, M350, M360 and M408 (manufactured by Toagosei Co., Ltd.), Viscoat #295, #300, #360, GPT, 3PA and #400 (manufactured by Osaka Organic Chemical Ind., Ltd.), NK Ester TMPT, A-TMPT, A-TMM-3, A-TMM-3L and A-TMMT (manufactured by Shin-Nakamura Chemical Co., Ltd.), Light Acrylate TMP-A, TMP-6EO-3A, PE-3A, PE-4A and DPE-6A (manufactured by Kyoeisha Chemical Co., Ltd.), and KAYARAD PET-30, GPO-303, TMPTA, TPA-320, DPHA, D-310, DPCA-20 and DPCA-60 (manufactured by Nippon Kayaku Co., Ltd.).

The composition of the present invention may further include a urethane (meth)acrylate oligomer. Examples of the urethane (meth)acrylate include urethane (meth)acrylate oligomers prepared from a polyether polyol such as polyethylene glycol and polytetramethyl glycol; polyester polyol obtained by the reaction of a dibasic acid such as succinic acid, adipic acid, azelaic acid, sebacic acid, phthalic acid, tetrahydrophthalic acid (anhydride), hexahydrophthalic acid (anhydride) with a diol such as ethylene glycol, propylene glycol, diethylene glycol, triethylene glycol, tetraethylene glycol, dipropylene glycol, 1,4-butanediol, 1,6-hexanediol, and neopentyl glycol; poly ε-caprolactone-modified polyol; polymethylvalerolactone-modified polyol; an alkyl polyol such as ethylene glycol, propylene glycol, 1,4-butanediol, 1,6-hexanediol and neopentyl glycol; a bisphenol A skeleton alkylene oxide modified polyol such as ethylene oxide adduct of bisphenol A and propylene oxide adduct of bisphenol A; a urethane (meth)acrylate oligomer produced from a bisphenol F skeleton alkylene oxide-modified polyol such as ethylene oxide adduct of bisphenol F and propylene oxide adduct of bisphenol F, or a mixture of these, and an organic polyisocyanate such as tolylene diisocyanate, isophorone diisocyanate, hexamethylene diisocyanate, diphenylmethane diisocyanate and xylylene diisocyanate, and a hydroxyl group-containing (meth)acrylate such as 2-hydroxyethyl (meth)acrylate and 2-hydroxypropyl (meth)acrylate. Use of the urethane (meth)acrylate oligomer is preferable in order to maintain the viscosity of the curable composition of the present invention at an appropriate level.

Examples of commercially available urethane (meth)acrylate monomers include Aronix M-120, M-150, M-156, M-215, M-220, M-225, M-240, M-245 and M-270 (manufactured by Toagosei Co., Ltd.), AIB, TBA, LA, LTA, STA, Viscoat #155, IBXA, Viscoat #158, #190, #150, #320, HEA, HPA, Viscoat #2000, #2100, DMA, Viscoat #195, #230, #260, #215, #335HP, #310HP, #310HG and #312 (manufactured by Osaka Organic Chemical Ind., Ltd.), Light Acrylate IAA, L-A, S-A, BO-A, EC-A, MTG-A, DMP-A, THF-A, IB-XA, HOA, HOP-A, HOA-MPL, HOA-MPE, Light Acrylate 3EG-A, 4EG-A, 9EG-A, NP-A, 1,6HX-A and DCP-A (manufactured by Kyoeisha Chemical Co., Ltd.), KAYARAD TC-110S, HDDA, NPGDA, TPGDA, PEG400DA, MANDA, HX-220 and HX-620 (manufactured by Nippon Kayaku Co., Ltd.), FA-511A, 512A and 513A (manufactured by Hitachi Chemical Co., Ltd.), VP (manufactured by BASF), and ACMO, DMAA and DMAPAA (manufactured by Kohjin Co., Ltd.).

The urethane (meth)acrylate oligomer is obtained as the reaction product of (a) a hydroxyl group-containing (meth)acrylate, (b) an organic polyisocyanate and (c) a polyol. Preferably, the urethane (meth)acrylate oligomer is a reaction product obtained by reacting (a) a hydroxy group-containing (meth)acrylate with (b) an organic polyisocyanate, and then reacting the resulting product with (c) a polyol.

These unsaturated monomers may be used either singly or, where necessary, with several kinds mixed together.

Examples of the radical photoinitiator include acetophenone, acetophenonebenzylketal, 1-hydroxycyclohexylphenylketone, 2,2-dimethoxy-2-phenylacetophenone, xanthone, fluorenone, benzaldehyde, fluorene, anthraquinone, triphenylamine, carbazole, 3-methyl-acetophenone, 4-chlorobenzophenone, 4,4'-dimethoxybenzophenone, 4,4'-diaminobenzophenone, Michler's ketone, benzoinpropyl ether, benzoinethyl ether, benzyldimethyl-ketal, 1-(4-isopropylphenyl)-2-hydroxy-2-methyl-propane-1-one, 2-hydroxy-2-methyl-1-phenylpropane-1-one, thioxanthone, diethylthioxanthone, 2-isopropylthioxanthone, 2-chlorothioxanthone, 2-methyl-1-[4-(methyl-thio)phenyl]-2-morpholino-propane-1-one, 2,4,6-trimethylbenzoyldiphenylphosphine oxide, bis-(2,6-dimethoxybenzoyl)-2,4,4-trimethyl-pentylphosphine oxide, ethyl-2,4,6-trimethyl-benzoylethoxyphenylphosphine oxide.

Examples of commercially available radical photoinitiators include Irgacure 184, 369, 651, 500, 819, 907, 784, 2959, CGI1700, CGI1750, CGI11850, CG24-61, Darocurl 116 and 1173 (manufactured by Ciba Specialty Chemicals Co., Ltd.), Lucirin LR8728 and 8893X (manufactured by BASF), Ubecryl P36 (manufactured by UCB) and KIP 150 (manufactured by Lamberti Spa). Among these examples, Lucirin LR8893X is preferable, since it is easily dissolved in liquid state and has a high sensitivity.

The content of the radical photoinitiator in the total composition is preferably 0.01 % to 10% by weight, and particularly preferably 0.5% to 7% by weight. The upper limit is preferably set to ensure appropriate curing properties for the composition, mechanical characteristics, optical characteristics, handling capability, and the like for the cured product. The lower limit is preferably set to prevent a decrease in the curing rate.

The composition of the present invention may further comprise a photosensitizer. Examples of the photosensitizer include triethylamine, diethylamine, N-methyldiethanolamine, ethanolamine, 4-dimethylaminobenzoic acid, methyl 4-dimethylaminobenzoate, ethyl 4-dimethylaminobenzoate, and isoamyl 4-dimethylaminobenzoate. Commercially available examples include Ubecryl P102, 103, 104, and 105 (manufactured by UCB).

In addition to the above components, additives such as antioxidants, UV absorbers, light stabilizers, silane coupling agents, coating surface improvers, heat-polymerization inhibitors, leveling agents, surfactants, coloring agents, preservatives, plasticizers, lubricants, solvents, fillers, aging preventives, wettability improvers and mold release agents may be added as required.

Examples of antioxidants include Irganox 1010, 1035, 1076 and 1222 (manufactured by Ciba Specialty Chemicals Co., Ltd.), and Antigen P, 3C, FR and GA-80 (manufactured by Sumitomo Chemical Industries Co., Ltd.). Examples of UV absorbers include Tinuvin P, 234, 320, 326, 327, 328, 329 and 213 (manufactured by Ciba Specialty Chemicals Co., Ltd.), and Seesorb 102, 103, 110, 501, 202, 712 and 704 (manufactured by Shipro Kasei Kaisha, Ltd.). Examples of light stabilizers include Tinuvin 292, 144 and 622LD (manufactured by Ciba Specialty Chemicals Co., Ltd.), Sanol LS770 (manufactured by Sankyo Co., Ltd.) and Sumisorb TM-061 (manufactured by Sumitomo Chemical Industries Co., Ltd.). Examples of silane coupling agents include γ-aminopropyltriethoxysilane, γ-mercaptopropyltrimethoxysilane, and γ-methacryloxypropyltrimethoxysilane, and commercially available products such as SH6062 and SH6030 (manufactured by Toray-Dow Corning Silicone Co., Ltd.), and KBE903, KBE603 and KBE403 (manufactured by Shin-Etsu Chemical Co., Ltd.). Examples of coating surface improvers include silicone additives such as dimethylsiloxane polyether and nonionic fluorosurfactants. Commercially available examples of silicone additives include DC-57 and DC-190 (manufactured by Dow-Corning), SH-28PA, SH-29PA, SH-30PA and SH-190 (manufactured by Toray-Dow Corning Silicone Co., Ltd.), KF351, KF352, KF353 and KF354 (manufactured by Shin-Etsu Chemical Co., Ltd.), and L-700, L-7002, L-7500 and FK-024-90 (manufactured by Nippon Unicar Co., Ltd.). Commercially available examples of nonionic fluorosurfactants include FC-430 and FC-171 (manufactured by 3M Corporation), and Megafac F-176, F-177 and R-08 (manufactured by Dainippon Ink and Chemicals, Inc.). Examples of mold release agents include Plysurf A208F (manufactured by Dai-Ichi Kogyo Seiyaku Co., Ltd.).

The organic solvent for viscosity control of the resin solution according to the present invention may be any solvent that can be mixed with the resin solution without any causing non-uniformity such as precipitation, phase separation, cloudiness, or the like. Examples of such solvents include acetone, methyl ethyl ketone, methyl isobutyl ketone, ethanol, propanol, butanol, 2-methoxyethanol, cyclohexanol, cyclohexane, cyclohexanone, toluene and the like. These solvents may also be mixed together where necessary. When an organic solvent is added, it is necessary to include a step of drying and evaporating the organic solvent in the product manufacturing process. However, if a large amount of unevaporated solvent remains in the product, there is the risk that the mechanical strength of the product will deteriorate. Moreover, the organic solvent can evaporate and diffuse during product use, causing offensive odors and adversely affecting health. Thus, it is not preferable to use an organic solvent having a high boiling point, since the amount of residual solvent will increase. However, if the boiling point is too low, vigorous evaporation can cause surface roughening, surface defects due the heat of vaporization as condensation adhering to the composition surface is dried, an increased risk of ignition or the like due to the increased vapor concentration. Hence, the boiling point of the organic solvent is preferably 50°C to 150°C, and more preferably 70°C to 120°C. From the perspective of the material solubility and boiling point, the organic solvent is preferably methyl ethyl ketone (bp of 79.6°C), 1-propanol (bp of 97.2°C), or the like.

The amount of organic solvent added into the resin solution according to the present invention varies depending on the type of solvent and the viscosity of the resin solution prior to the solvent being added. However, to sufficiently improve coatability, the added amount can be 10% to 40% by weight, and is preferably 15% to 30% by weight. If the amount of added organic solvent is too small, the effects of lowering viscosity and the effects of increasing the amount of coating are small, and coatability is not sufficiently improved. However, if the resin solution is overly diluted, the viscosity is too low, causing problems such as streaking to due to liquid running on the sheet-form body, and liquid flowing onto the reverse side of sheet-form body. Further, drying may be insufficient during the drying step, leaving a large amount of organic solvent in the product. This can cause deterioration in product functionality, and result in offensive odors and adverse effects on health due to evaporation when the product is in use.

According to the present invention, the resin solution can be prepared by mixing the above-described components using a well-known method and making use of thermal dissolution where necessary.

The viscosity of the resin solution of the present invention after preparation in the above-described manner is normally 10 mPa-s/25°C to 50,000 mPa-s/25°C. When supplying the resin solution to the base material or the embossing roller, if the viscosity is too high, it becomes difficult to supply the composition uniformly. When producing lenses, this can cause streaks or swells in the coating, and cause air bubbles to form therein. This makes it more difficult to obtain the desired lens thickness, and prevents the product from functioning properly as lenses. This tendency becomes especially noticeable when the line speed is increased. Therefore, when supplying the resin solution, a lower viscosity is preferable. A viscosity of 10 mPa·s to 100 mPa·s is preferable, and a viscosity of 10 mPa·s to 50 mPa·s is more preferable. Low viscosities of this order can be prepared by adding a suitable amount of the organic solvent. It is also possible to control the viscosity by holding the temperature of the coating solution at a temperature setting. On the other hand, if the viscosity is too low after the solvent has evaporated, the lens thickness is difficult to control during pressing by the embossing roller, and uniform lenses having a constant thickness cannot always be formed. Thus the viscosity is preferably 100 mPa·s to 3,000 mPa·s. When mixing the organic solvent, providing a step of evaporating the organic solvent by drying with heat or the like between the step of supplying the resin solution and the step of embossing with the embossing roller makes it possible to supply the resin solution uniformly at a low viscosity. Also, when embossing with the embossing roller, the drying of the organic solvent allows the embossing to be carried out uniformly with a resin solution having a higher viscosity.

The following describes the operations of the embossed sheet manufacturing apparatus 10 shown in Figure 1. The sheet-form body supplying apparatus 11 feeds the sheet W at a constant speed. The sheet W is fed to the coating apparatus 12, and the resin layer is formed by applying the resin (coating liquid F) to the surface of the sheet W. Next, the sheet W is fed to a forming apparatus including the embossing roller 13 and the nip roller 14. At this point, CO₂ gas is uniformly discharged from the nozzle 22 towards the meeting portion 23 of the sheet W and the embossing roller 13. Via this process, the sheet W, which runs continuously as CO₂ gas is discharged, is pressed by the rotating embossing roller 13 and the nip roller 14 at a location corresponding to 9 o'clock on the embossing roller 13, and is thereby processed by the rollers. In other words, the sheet W is wound onto the rotating embossing roller 13, and the indentations on the surface of the embossing roller 13 are transferred to the resin layer.

Next, with the sheet W in a state of being wound around the embossing roller 13, the resin layer and the adhesive agent layer are irradiated by the resin curing apparatus 15, thereby curing the resin layer and the adhesive agent layer. Thereafter, at a location corresponding to 3 o'clock on the embossing roller 13, the sheet W is detached from the embossing roller 13 by being wound around the detaching roller 16.

Note that, though not shown in Figure 1, once the sheet W has been detached, irradiation can be performed a second time to further promote curing.

Once detached, the sheet W is conveyed to the sheet winding apparatus 18, and protective film H supplied from the protective film supplying apparatus 17 is supplied to the surface of the sheet W. The sheet formed from the two layers of film is then wound around and stored on a winding roller in the sheet winding apparatus 18.

Thus, since CO₂ gas with excellent permeability is supplied to the resin and the sheet W at the meeting portion 23 of the sheet W and the embossing roller 13 and the indented sheet is produced as the CO₂ is introduced, the indented sheet with the regular pattern of fine indentations formed on a surface thereof can be manufactured with defect-free, high-quality results. Also, as recorded in the embodiment below, the sheet-form body running speed can be increased, thereby increasing indented sheet productivity.

The above has described the first embodiment of the manufacturing method and the manufacturing apparatus of the present invention. However, the present invention is not limited to the above-described embodiment, and may take various forms.

For instance, though the first embodiment took a form in which a roller-form embossing roller 13 was used, the indenting roller can take the form of a strip-shaped body, such as an endless belt, imprinted with the indentation pattern (embossing pattern) on a surface thereof. This is possible because this type of strip-shaped body operates in a similar manner to the columnar roller and achieves similar results.

In the embodiment shown in Figure 1, a manufacturing method and apparatus for manufacturing indented sheet by running a sheet W which has a resin layer formed on a surface thereof through the embossing roller 13 were described. However, the invention may also be applied to a manufacturing apparatus which manufactures an indented sheet by heating a thermoplastic sheet-form body and running the thermoplastic sheet-form body through the indented roller. Moreover, the invention may also be applied to a manufacturing apparatus which manufactures an indented sheet by pre-forming a sheet-form body by extruding a thermoplastic into sheet-form using an extruder and running the sheet-form body through the indented roller. In each of the apparatuses, the gas accompanying the sheet-form body when the sheet-form body is caused to contact the indented roller is CO₂ gas.

The following describes a second embodiment of the indented sheet manufacturing method and apparatus according to the present invention.

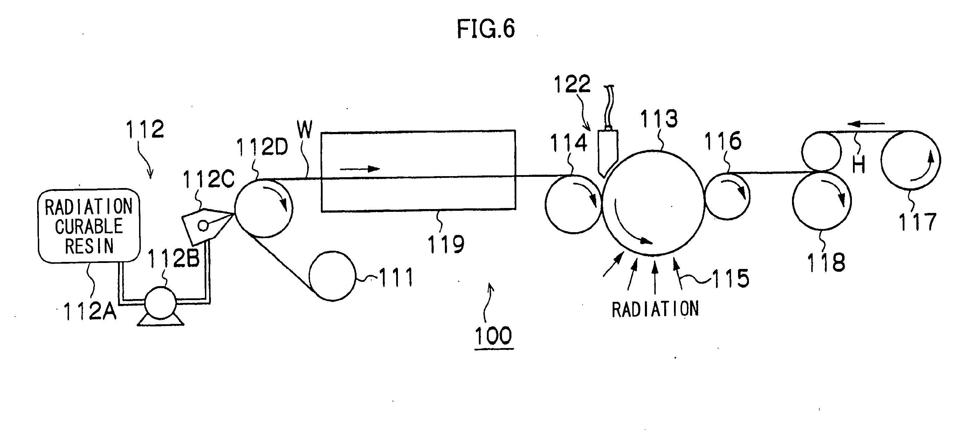

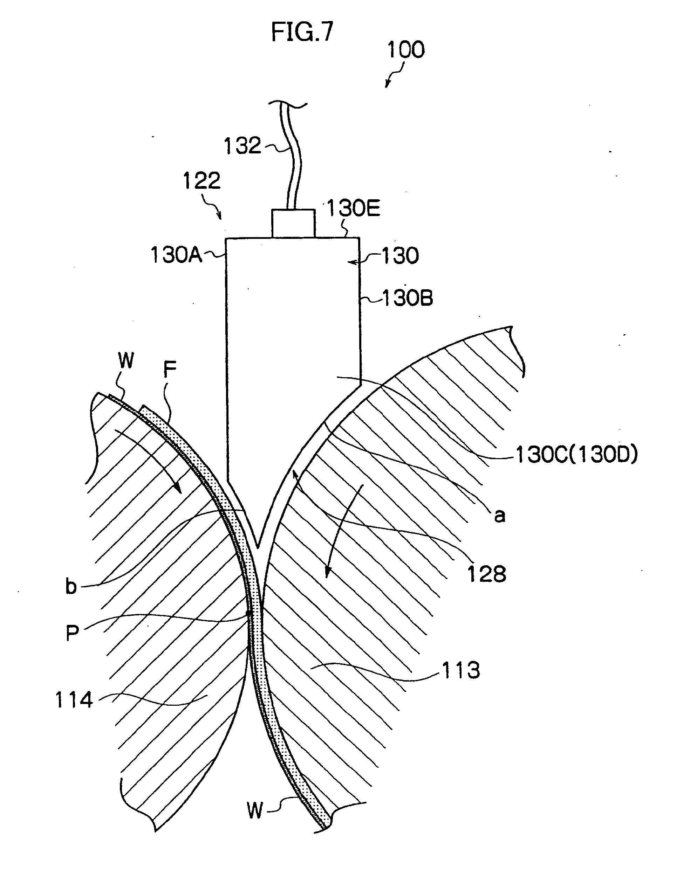

Figure 6 is a schematic showing a construction of the second embodiment of the embossed sheet manufacturing apparatus 100 according to the present invention. The embossed sheet manufacturing apparatus 100 is constructed from a sheet-form body supplying unit 111, a coating unit 112, a drying unit 119, an embossing roller 113 which is the indenting roller, a nip roller 114, a suction unit 122 for sucking gas from the gap between the embossing roller 113 and a resin material F (see Figure 7), a resin curing unit 115, a detaching roller 116, a protective film supplying unit 117, and a sheet winding unit 118.

The sheet-form body supplying unit 111, which is means of supplying the sheet-form body, acts to feed the sheet W which is sheet-form body, and is constructed to include a feed roller having the sheet W wound thereon.

The coating unit 112 is an apparatus for coating a radiation curable resin solution onto a surface of the sheet W, and is constructed from a liquid supply source 112A which supplies the radiation curable resin solution, a liquid supply apparatus (feed pump) 112B, a coating head 112C, a support roller 112D around which the sheet W is wound for support during coating, and pipe-work for supplying the radiation curable solution from the liquid supply source 112A to the coating head 112C. Note that a die coater (extrusion-type coater) is used as the coating head 112C.

The drying unit 119 can use any of a number of well-known methods provided that the selected method allows the coating solution coated onto the surface of the sheet W to be dried in a uniform manner, like in the tunnel-form drying apparatus shown in Figure 6. An electromagnetic radiation heating method using a heater, a convection heating method, a far infrared method, a vacuum method or like can, for instance, be used.

The embossing roller 113 must be capable transferring the indentations of the roller surface to the surface of the sheet W, and have a certain indentation pattern accuracy, a certain mechanical strength, a certain circularity, and the like. It is therefore preferable that the embossing roller 113 is metal roller.

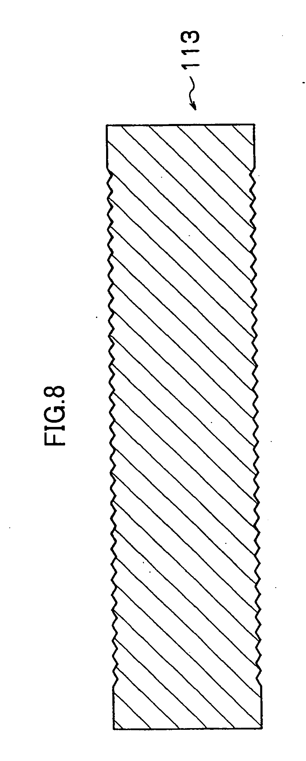

A regular pattern of fine indentations is formed on an external circumferential surface of the embossing roller 113 as shown in the cross-sectional diagram of Figure 8. This regular pattern of fine indentations is required to be the reverse of a pattern of fine indentations on the surface of the embossed sheet which is the commercial product.

Examples of commercial products using the embossed sheet include lenticular lenses having two-dimensionally arranged pattern of fine indentations, and a three dimensional arrays of, for instance, fly-eye lenses, or flat plate lenses made up of conical, pyramidal or other fine conical bodies laid out in the XY directions. The regular pattern of fine indentations on the external circumferential surface of the embossing roller 113 is arranged to correspond to the target pattern on the product.

To form the regular pattern of fine indentations on the external circumferential surface of the embossing roller 113, it is possible to use a diamond bit (single point) method to cut the surface of the embossing roller 113, or a method which forms the indentations directly using photoetching, electron beam lithography, or laser processing on the surface of the embossing roller 113. Alternatively, it is possible to use a method in which indentations are formed on the surface of a thin metal plate-form body using photoetching, electron beam lithography, laser processing, stereolithography, or the like, and the plate-form body is wound around and fixed to the circumference of a roller to form the embossing roller 113.

Alternatively, it is possible to use a method in which indentations are formed using photoetching, electron beam lithography, laser processing, stereolithography, or the like, on the surface of a material which is more easily processed than metal, a thin metal plate-form body is manufactured by forming a reverse mold of the indentations using electroforming or the like, and the plate-form body is wound around and fixed to the circumference of a roller to form the embossing roller 113. The case in which the plate is formed using an reverse mold produced by electroforming or the like has the advantage that a plurality of identical plate-form bodies can be obtained from a single original (mother).

It is preferable that demolding processing is performed at the surface of the embossing roller 113. Performing the demolding processing at the surface of the embossing roller 113 in this way allows the fine pattern of indentations be favorably maintained. Any of a number of well-know methods can be used as the demolding processing. One such method makes use of coating processing with a fluoropolymer. Note that it is preferable that the embossing roller 113 is provided with a driving unit. The embossing roller 113 rotates counter-clockwise (CCW) as shown by the arrow in the drawings.

The nip roller 114 is paired with the embossing roller 113 and performs roller processing by applying a force to the sheet W. The nip roller 114 is therefore required to have a predetermined mechanical strength, a predetermined circularity, and the like. If a longitudinal elastic modulus (Young's Modulus) of the surface of the nip roller 114 is too small, the rolling processing will not be sufficiently effective. If, on the other hand, the longitudinal elastic modulus is too large, the process becomes sensitive to the inclusion of foreign matter such as debris. It is therefore preferable that a suitable value for the longitudinal elastic modulus is selected. Note also that it is preferable that the nip roller 114 is provided with a driving unit. The nip roller 114 rotates clockwise (CW) as shown by the arrow in the drawings.

To apply a predetermined pressing force in the gap between the embossing roller 113 and the nip roller 114, it is preferable that one of the embossing roller 113 and the nip roller 114 is provided with a force applying unit. Similarly, one of the embossing roller 113 and the nip roller 114 is preferably provided with a fine adjustment unit to allow the gap (clearance) between the embossing roller 113 and the nip roller 114 to be accurately controlled.

The suction unit 122 acts to suck gas from between the embossing roller 113 and the resin material F, and is therefore provided in proximity to a detachment point P at which the sheet W is detached from the nip roller 114 and received by the embossing roller 113, as shown in the side elevation of Figure 7. Note that Figure 7 shows only the embossing roller 113 and the nip roller 114 as rollers. The detaching roller 116 has been omitted.

As shown in Figure 7, the suction unit 122 is mainly constructed from a suction chamber 130 which is substantially box-like and open at a suction mouth 128 facing the surface of the embossing roller, and an air tube 132 communicating between the suction chamber 130 and a vacuum pump which is not shown in the drawings. The suction mouth 128 of the suction unit 122 is formed with a curve which follows circumferential form of the embossing roller 113.

In other words, the suction chamber 130 is constructed from a front panel 130A and rear panel 130B both substantially the same length as the embossing roller 113 and extending in a width direction of the embossing roller 113, a pair of opposing side panels 130C and 130D connecting the front panel 130A with the rear panel 130B, and an upper panel 130E.

Lower edges a of the pair of side panels 130C and 130D are formed to describe a curve which follows the circumferential form of the embossing roller 113, and lower edges b of the side panels 130C and 130D are formed to describe a curve which follows the circumferential form of the nip roller 114.

Forming the suction chamber 130 in this way allows the suction mouth 128 to be closely positioned so as to just avoid contacting the surfaces of the embossing roller 113 and the nip roller 114, thereby reducing air leaks during suction to the lowest possible level. Hence, it is possible to efficiently suck gas from the gap between the embossing roller 113 and the resin material F, and accurately transfer the indentations of the embossing roller 113 to the resin material F.

Examples of the form of the indentations on embossing roller 113 include grooves with a triangular cross-sectional form and a roller axial direction pitch of 50 µm. The cross-section of the grooves has triangular forms with angles of 90 degrees at grooves' top, and also has triangular forms with angles of 90 degrees and no flat section at grooves' bottom. The groove width is therefore 50 µm and the groove depth is approximately 25 µm. Since the grooves are formed seamlessly around the circumference of the roller to give an endless construction, the embossing roller 113 can be used to form lenticular lenses (prism sheet) having a triangular cross-section in the sheet W.

In the case that the indentation form on the embossing roller 13 is comparatively rough, such as when the pitch and steps in the indentations are of the order of mm for instance, the lower edge of the rear panel 130B of the suction mouth 128 can be formed with indentations which follow the indentations formed in the surface of the embossing roller 113, thereby allowing the suction mouth 128 to be closely positioned so as to just avoid contact with the surface of the embossing roller 113 and air leakage during suction to be reduced to the lowest possible level.

The resin curing unit 115 is an irradiating unit provided opposite the embossing roller 113 on a downstream side of the nip roller 114. The resin curing unit 115 cures the resin solution layer through the sheet W by irradiation, and is preferably capable of performing irradiation with a wavelength of light (radiation) appropriate to the curing properties of the resin and with an amount of radiation appropriate to the speed at which the sheet W is being conveyed. The resin curing unit 115 can, for instance, be a columnar irradiating lamp with a length that is approximately the same as the width of the sheet W. Alternatively, a plurality of columnar irradiating lamps can be provided in parallel, and a reflecting plate can be provided on a back surface of each columnar irradiating lamp.

The detaching roller 116 is paired with the embossing roller 113, operates to detach the sheet W from the embossing roller 113, and is therefore required to have a predetermined mechanical strength, a predetermined circularity, and the like. At a point of detachment, the sheet W that is wound on the circumferential surface of the embossing roller 113 becomes sandwiched between the rotating embossing roller 113 and the detaching roller 116. The sheet W is then detached from the embossing roller 113, and wound onto the detaching roller 116. To enhance the reliability of this operation, the detaching roller 116 is preferably provided with a driving unit. The detaching roller 116 rotates clockwise (CW) as shown by the arrow in the drawings.

Note that when the temperature is raised by the curing of the resin or the like, the detaching roller 116 may be provided with a cooling unit to cool the sheet W during the detachment and ensure a reliable detachment.

Although not shown in the drawings, a construction in which a plurality of back-up rollers are provided opposing the embossing roller 113 between a pressing point (located at 9 o'clock) and a detachment point (located at 3 o'clock) on the embossing roller 113 can be used. In such a construction, curing is performed while applying a pressing force to the sheet W using the plurality of back-up rollers and the embossing roller 113.

The sheet winding unit 118 acts to store the sheet W after detachment, and is constructed to include a winding roller on which the sheet W is wound. In the sheet winding unit 118, a protective film H supplied by an adjacently provided protective film supplying unit 117 is supplied to the surface of the sheet W, and the two-layered film is stored by the sheet winding unit 118.

In the embossed sheet manufacturing apparatus 100, guide rollers which form a conveying path for the sheet W may be provided between the coating unit 112 and the embossing roller 113, between the detaching roller 116 and the sheet winding unit 118 and elsewhere. Besides the guide rollers tension rollers or the like can be provided where necessary to take up slack in the sheet W as the sheet W is conveyed.

The materials applied in the present invention have been described above, and a further description is therefore omitted here.

In the case where a prism lens sheet is to be formed, it is particularly preferable that the cured product obtained by curing the resin solution of the present inventions using radiation is a material that has the following properties (refractive index and softening point).

The refractive index is preferably 1.55 or more and more preferably 1.56 or more at a cured product temperature of 25°C. This is because if the refractive index of the cured product is less than 1.55 at the cured product temperature of 25°C, it is not always possible to secure sufficient frontal brightness in prism lens sheet formed using the composition.

The softening temperature is preferably 40°C or more and more preferably 50°C or more. This is because if the softening temperature is less than 40°C, the product may be insufficiently heat-resistant.

Returning to Figure 6, the following describes the operations of the embossed sheet manufacturing apparatus 100. The sheet-form body supplying unit 111 feeds the sheet W at a constant speed. The sheet W is fed to the coating unit 112, and the resin solution (resin material F) is applied to the surface of the sheet W. The resin solution applied to the sheet W is dried by the drying unit 119 after application of the resin solution, and the excess solvent is evaporated.

Next, the sheet W is fed to the forming unit which includes the embossing roller 113 and the nip roller 114. By this process, the continuously fed sheet W is roller-processed by pressing using the rotating embossing roller 113 and the niproller 114 at a location corresponding to 9 o'clock on the embossing roller 113. In other words, the sheet W is wound onto the rotating embossing roller 113, and the indentations on the surface of the embossing roller 113 are transferred to the resin material F while gas is sucked from between the embossing roller 113 and the resin material F using the suction unit 122.

Since, according to this process, the gas that has entered the gap between the embossing roller 113 and the resin material F is removed and the resin material F adheres to the indentations on the surface of the embossing roller 113, it is possible to accurately transfer the indentations on the embossing roller 113 to the resin material F.

Next, with the sheet W in a state of being wound around the embossing roller 113, the resin solution layer is irradiated through the sheet W by the resin curing unit 115, thereby curing the resin solution layer. Thereafter, at a location corresponding to 3 o'clock on the embossing roller 113, the sheet W is detached from the embossing roller 113 by being wound around the detaching roller 116.

Note that, though not shown in Figure 6, once the sheet W has been detached, irradiation can be performed a second time to further promote curing.

Once detached, the sheet W is conveyed to the sheet winding unit 118, and protective film H supplied from the protective film supplying unit 117 is supplied to the surface of the sheet W. The sheet formed from the two layers of film is then wound around and stored on the winding roller of the sheet winding unit 118.

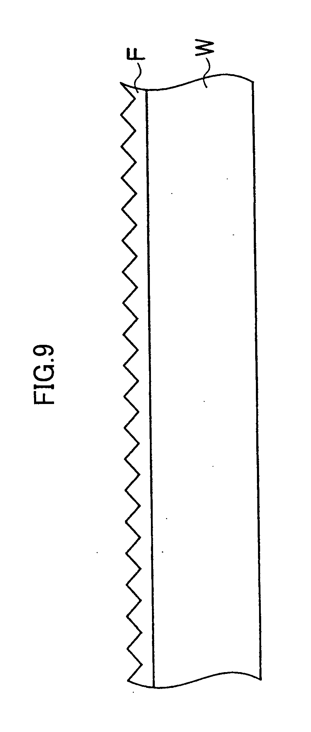

Thus, the resin layer on the surface of the sheet W is formed with uniform thickness. Moreover, the embossing by the embossing roller 113 is stable and uniform. As a result, it is possible to manufacture the indented sheet which has a regular pattern of fine indentations on a surface thereof with high-quality, defect-free results. A schematic cross-section of the sheet W (indented sheet) is shown in Figure 9.

The following describes a third embodiment of the indented sheet manufacturing method and apparatus of the present invention. The basic construction of the embossed sheet manufacturing apparatus 100 of the third embodiment is substantially the same as the construction of the second embodiment. Hence, the following only describes the points of difference.

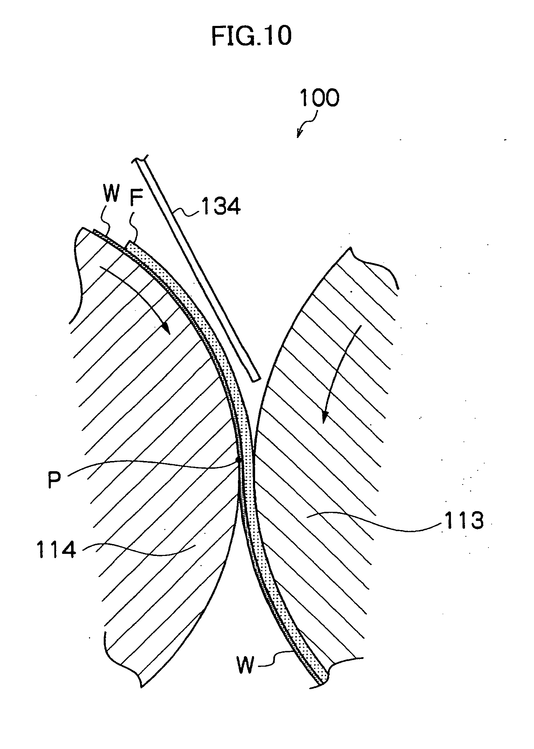

Figure 10 is a construction diagram showing the main parts of the resin sheet manufacturing apparatus 100 of the third embodiment, and corresponds to Figure 7 of the second embodiment. Note that members which are identical to or resemble those of the second embodiment shown in Figure 6 and Figure 7 are marked with the same symbols. Moreover, descriptions of these members have been omitted.

As shown in Figure 10, a wind-blocking plate 134, which is a wind-blocking member, is provided in place of the suction unit 122 of the second embodiment. The wind-blocking plate 134 is a plate member which extends in the width direction of the embossing roller 113 with a length that is approximately the same as the embossing roller 113. The wind-blocking plate 134 is supported at a base edge by an apparatus body which is not shown in the drawings, and is arranged so that predetermined clearance (of 0.1 mm for instance) with respect to the surface of the embossing roller 113 can be maintained.

Constructing the wind-blocking plate 134 in this way allows the amount of gas sucked in by the rotation of the embossing roller 113 to be reduced to the lowest possible level. Hence, it is possible to efficiently prevent gas being sucked into the gap between the embossing roller 113 and the resin material F, and accurately transfer the indentations of the embossing roller 113 to the resin material F.

In the case that the indentations on the embossing roller 113 are comparatively rough, such as when the pitch and steps in the indentations are of the order of mm, the planar-form leading edge of the wind-blocking plate 134 can be formed with indentations which follow the indentations formed in the surface of the embossing roller 113, thereby allowing the leading edge of the wind-blocking plate 134 to be closely positioned so as to just avoid contact with the surface of the embossing roller 113, and the amount of gas sucked into the gap to be reduced to the lowest possible level.

The following describes a fourth embodiment of the indented sheet manufacturing method and apparatus of the present invention. The basic construction of the embossed sheet manufacturing apparatus 100 of this embodiment is substantially the same as that of the above-described second embodiment. Hence, the following only describes the points of difference.

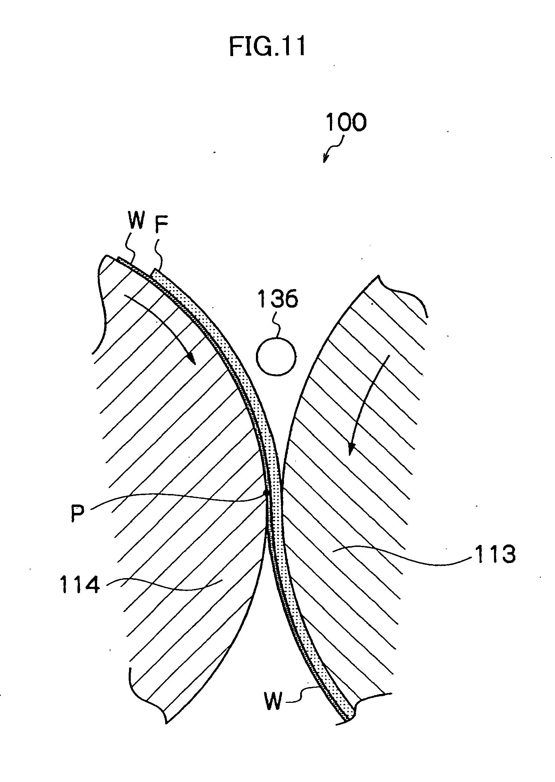

Figure 11 is a construction diagram showing the main parts of the resin sheet manufacturing apparatus 100 of the fourth embodiment, and corresponds to the second embodiment (Figure 7) and the third embodiment (Figure 10). Note that members which are identical to or resemble those of the second embodiment shown in Figure 6 and Figure 7 are marked with the same symbols. Moreover, descriptions of these members have been omitted.

In Figure 11 a wind-blocking roller 136, which is a wind-blocking member, is provided in place of the suction unit 122 of the second embodiment. The wind-blocking roller 136 is a roller member that extends in the width direction of the embossing roller 113 with a length that is substantially the same as the embossing roller. The wind-blocking roller 136 is supported by an apparatus body which is not shown in the drawings, and is arranged so that predetermined clearance (of 0.1 mm for instance) with respect to the surface of the embossing roller 113 can be maintained.

Constructing the wind-blocking roller 136 in this way allows the amount of gas sucked in by the rotation of the embossing roller 113 to be reduced to the lowest possible level. Hence, it is possible to efficiently prevent gas being sucked into the gap between the embossing roller 113 and the resin material F, and accurately transfer the indentations of the embossing roller 113 to the resin material F.

In the case that the indentations on the embossing roller 113 are comparatively rough, such as when the pitch and steps in the indentations are of the order of mm, the circumferential surface-form the wind-blocking roller 136 can be formed with indentations which follow the indentations formed in the surface of the embossing roller 113, thereby allowing the leading edge of the wind-blocking roller 136 to be closely positioned so as to just avoid contact with the surface of the embossing roller 113, and the amount of gas sucked into the gap to be reduced to the lowest possible level.

The wind-blocking roller 136 may be constructed so as to allow rotation or as a simple non-rotating rod member, and is capable of achieving the predetermined effects in both cases. Moreover, when the construction which allows rotation is used, the roller may make use of a driving mechanism or be of a follower type and only capable of free rotation.

The above has described the fourth embodiment of the indented sheet manufacturing method and apparatus of the present invention. However, the present invention is not limited to the above-described embodiment, and may take various other forms.

For example, although the fourth embodiment has employed the suction unit 122 and two types of wind-blocking member (the wind-blocking plate 134 and the wind-blocking roller 136), other similar constructions may be used.

Moreover, although the fourth embodiment make uses of the roller-form embossing roller 113, an arrangement in which the pattern of indentations (embossing pattern) is formed on the surface of a strip-shaped body such as an endless belt can also be used. This is possible because this type of strip-shaped body operates in a similar manner to the columnar roller and achieves similar results.

The following is a detailed description of an embodiment (fifth embodiment) of the method and apparatus in the case that a gas curtain is formed by blowing a CO gas towards the surface of the embossing roller using a gas discharging nozzle, and the flow of gas towards the nip point which accompanies the rotation of the embossing roller is blocked.

Figure 12 is a schematic showing the embossed sheet manufacturing apparatus 210 of the present embodiment. As shown in Figure 12, in the manufacturing apparatus 210, the embossing roller 216 and the nip roller 218 are adjacently disposed so as to be parallel with each other, and a detaching roller 220 is adjacently disposed in parallel with the embossing roller 216 on an opposite side of the embossing roller 216 to the nip roller 218. A conveyor strip-shaped supporting body 224 is nipped at a nip point P where the embossing roller 216 contacts the nip roller 218. A resin film applied to the supporting body 224 is conveyed in contact with a surface of the embossing roller 216 on the resin film side, and detached from the embossing roller 216 by the detaching roller 220.

A gas discharging nozzle 226 which discharges gas towards the surface of the embossing roller 216 is provided in proximity to the resin film and the nip point P. The gas discharged from the gas discharging nozzle 226 has permeability with respect to the resin film, and may be CO₂ gas or the like. The gas discharging nozzle 226 may be formed as a long throttle extending in the width direction of the embossing roller 216. With this arrangement, gas discharged from the nozzle forms a gas curtain between the leading edge of the nozzle and the surface of the embossing roller 216.

The manufacturing apparatus 210 therefore blows CO₂ gas from the gas discharging nozzle 226 towards the resin film on surface of the embossing roller 216 to form a gas curtain which blocks accompanying gas that flows towards the nip point P as the embossing roller 216 rotates. The accompanying gas is thereby replaced with a gas having permeability. With this construction, provided the gas has permeability, the gas present at the surface of the resin film in an area 228 surrounded by the resin film and the embossing roller 216 effectively will prevent the occurrence of defects caused by the introduction of air.

As shown in Figure 12, the gas discharging nozzle 226 is provided in proximity to the above-described nip point P. When an arc distance of the embossing roller 216 (hereinafter referred to as "a separation from the nip point") from the blow point Q to the nip point P is expressed as an embossing roller central angle α (which is the angle formed between a line connecting a center O of the embossing roller 216 and the nip point P and a line connecting the center O), the position where the gas discharging nozzle 226 is provided is preferably the position where the angle α becomes 90 degrees or less, and more preferably 80 degrees or less. This is because if the arc distance from the nip point P to the blow point Q gives a central angle α exceeding 90 degrees, the blown gas diffuses, preventing a stable gas curtain from being formed and consequently reducing the inhibitive effect on defects caused by the introduction of air. Moreover, if the central angle α exceeds 80 degrees, variations in effectiveness due to a gas exhaust method and the like are more likely to occur. It is therefore preferable that the central angle α is 80 degrees or less.

A blowing angle β at which gas is blown at the surface of the embossing roller 216 is within ± 20 degrees and preferably within ± 10 degrees from a direction toward the center of the embossing roller 216 (which is a direction perpendicular to the surface of the embossing roller 216).

A distance L from the leading edge of the gas discharging nozzle 226 to the surface of the embossing roller 216 (hereinafter referred to as a "distance from the embossing roller") in a blowing direction perpendicular to the surface of the embossing roller 216 is less than 50 mm and preferably less than 40 mm. This is because if the distance from the embossing roller 216 exceeds 50 mm, the blown gas diffuses, preventing the formation of a stable gas curtain and consequently reducing the inhibitive effect on defects resulting from the introduction of air.

Further, the flow rate of the gas blown from the gas discharging nozzle 226 is preferably 1 m/sec or more, and more preferably 2 m/sec or more. This is because if the gas flow rate is less than 1 m/sec, the blown gas diffuses, preventing the formation of a stable gas curtain and consequently reducing the inhibitive effect on defects resulting from the introduction of air.

The described preferable conditions on the gas discharging nozzle 226 bring a particular advantage when the line speed and the rotation speed of the embossing roller 216 are increased. This is because when the line speed is very high, the influence of the air accompanying the embossing roller 216 is greater, it becomes difficult to sufficiently block the accompanying air by simply blowing gas at the embossing roller 216, and the gas introduced in place of the air in the area 228 surrounded by the resin film and the embossing roller 216 diffuses by turbulent diffusion.

### Examples

The following describes some specific examples of the present invention, but the present invention is not limited to these examples.

### Preparation of Resin Solution

The chemical compounds shown in the table of Figure 2 are mixed at the weight ratio in the table and dissolved by heating to 50° C and stirring to obtain a resin solution. The names and make up of the compounds are as follows.
EB3700: Ebekryl 3700 manufactured by Daicel UC Co., Ltd.; bisphenol A-type epoxy acrylate (viscosity = 2200 mPa·s/65°C)
BPE200: NK Ester BPE-200 manufactured by Shin-Nakamura Chemical Co., Ltd.; ethylene oxide adduct of bisphenol A methacrylic acid ester (viscosity = 590 mPa·s/25°C)
BR31: New Frontier BR-31 manufactured by Dai-Ichi Kogyo Seiyaku Co, Ltd.; tribromophenoxyethyl acrylate (solid at room temperature, melting point 50°C or more)
LR8893X: Lucirin LR8893X, a photo-radical initiator manufactured by BASF Co., Ltd.; ethyl-2,4,6-trimethyl-bezoyl-ethoxyphenylosphine oxide
MEK: methyl ethyl ketone

### [Manufacture of Embossed Sheet]

The embossed sheet manufacturing apparatus 10 with the construction shown in Figure 1 was used to manufacture an embossed sheet.

For the sheet W in example 1 and comparative example 1, a transparent PET (polyethylene terephthalate) film with a width of 500 mm and a thickness of 100 µm was used.

As the embossing roller 13, a roller made of S45C with a length (in the sheet W width direction) of 700 mm, a diameter of 300 mm, and nickel as surface material was used. Grooves with a roller axial direction pitch of 50 µm were formed by cutting with a (single point) diamond bit the circumferential surface of the roller which is approximately 500 mm wide. The cross-section of the grooves includes triangular forms with top angles of 90 degrees. The cross-section of the groove bottoms is also triangular with angles of 90 degrees on the non-flat bottom portions. The groove width is therefore 50 µm while the groove depth is about 25 µm. Since the grooves are formed seamlessly around the circumference of the roller to give an endless construction, this embossing roller 13 can be used to form lenticular lenses (prism sheet) having a triangular cross-section on the sheet W. The surface of the roller undergoes nickel plating after the processing to form the grooves.

For the coating apparatus 12, a die coater was used. For coating head 12C of the coating apparatus 12, an extrusion type apparatus was used.

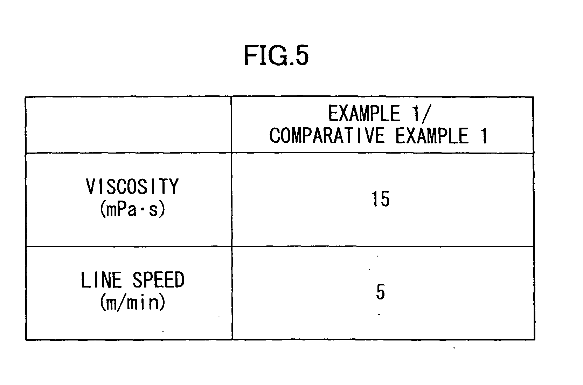

For the coating solution F (resin solution), the solutions recorded in the table of Figure 4 were used. Note that the sample of comparative example 1 was manufactured by combining the resin solutions and feeding rates shown in the table of Figure 5. Note also that the resin solution and feed rate combination of the example 1 is the same as that of comparative example 1 and that in example 1 CO₂ gas is supplied uniformly from the carbon dioxide supplying apparatus 20 to the meeting portion of the sheet W and the embossing roller 13.

The wet-state coating solution F (resin solution) thickness was set so that the film thickness after drying off the organic solvent was 20 µm by controlling the amount of the coating solution F supplied by the solution supplying apparatus (feed pump) 12B to the coating head 12C.

For the drying apparatus 19 a convection heating apparatus was used. The hot air temperature was set to 100°C.

For the nip roller 14, a roller with a diameter of 200 mm and a surface layer of silicon rubber with a rubber hardness of 90 was used. The nip pressure (effective nip pressure) applied to the sheet W using the embossing roller 13 and the nip roller 14 was 0.5 Pa.

For the resin curing apparatus 15, a metal halide lamp was used with an irradiation energy of 1000 mJ/cm². The sheet W with the indentation pattern formed thereon is obtained using the above-described conditions.

### [Evaluation of Embossing]

The sheet W was cut and the embossing was evaluated by measuring the cross-sectional form at a plurality of locations in the indentation pattern using an SEM (scanning electron microscope).

### [Example 1: Corresponding to a First Aspect of the Present Invention]

In Example 1, there were no transfer defects per square meter resulting from the inclusion of air. In the Example 1, CO₂ gas was blown at the surface of the sheet W with a gas velocity of 5 m/min using a nozzle 22 having a slit clearance of 0.5 m and a width of 400 mm and located above the nip roller 14.

### [Comparative Example 1]

In Comparative Example 1, there were five transfer defects per square meter as a result of the inclusion of air. The line speed at which the number of transfer defects dropped to zero was 2 m/min, and it was not therefore possible to improve productivity.

### [Example 2: Corresponding to a Second Aspect of the Present Invention]

In Example 2, the pattern-transferred film was obtained by heating a polycarbonate film with a thickness of 200 µm to 200°C, heating the embossing roller to 160°C, and nipping the polycarbonate film against the indenting roller using the nip roller. The line (feeding) speed for this process was 5 m/min, and CO₂ gas was blown in the same manner as Example 1. In Example 2, the number of transfer defects per square meter resulting from the introduction of air was zero. Since it was possible to increase the line speed from approximately 5 m/min to 5 m/min, productivity was improved.

### [Comparative Example 2]

Other than in the CO₂ gas blowing, the processing of Comparative Example 2 is the same as in Example 2. In the Comparative Example 2, there were three transfer defects per square meter as a result of the inclusion of air. The line speed at which the number of transfer defects dropped to zero was 2 m/min, and it was not therefore possible to improve productivity.

### [Example 3: Corresponding to a Third Aspect of the Present Invention]

In Example 3, the pattern-transferred film was obtained by extruding a polycarbonate film to form a film with a width of 400 mm and a thickness of 200 µm using an extruder, heating the embossing roller to 160°C, and nipping the resulting polycarbonate film against the indenting roller using the nip roller. The line speed for this process was 5 m/min, and the CO₂ gas blowing was performed in the same way as in Example 1. In Example 3, there were no transfer defects per square meter as a result of the introduction of air.

### [Comparative Example 3]

In Comparative Example 3, the CO₂ gas blowing is performed in the same manner as in Example 3. In Comparative Example 3, there were three transfer defects per square meter as a result of the inclusion of air. The line speed at which the number of transfer defects dropped to zero was 2 m/min, and it was not therefore possible to improve productivity.

From the above-described results, it was possible to confirm the advantage of the present invention in each examples in which a jet CO₂ gas was emitted and carried towards a meeting portion of the sheet-form body and the indenting roller. The advantage is that it is possible to manufacture indented sheet having a regular pattern of fine indentations formed on a surface thereof with defect-free high-quality results at a high line-speed without affecting the properties of the cured film to give a favorable productivity.

## Claims

1. An indented sheet manufacturing method comprising:
a dispatching step of dispatching a strip-shaped flexible sheet-form body; a running step of causing the dispatched sheet-form body to run; and a transfer-forming step of causing a surface of the sheet-form body to contact a surface of an indenting roller to transfer indentations on the surface of the indenting roller to the surface of the sheet-form body, wherein
in the transfer-forming step, control is performed in proximity to a portion at which the sheet-form body contacts the indenting roller so as to lower a proportion of air in a gas accompanying the sheet-form body to below a normal atmospheric level.

2. The indented sheet manufacturing method of claim 1 further comprising
a coating step of coating a resin solution onto the surface of the sheet-form body to form a resin solution layer, wherein
in the transfer-forming step, the control is performed by increasing, when the surface side of the sheet-form body, onto which the resin solution is coated is caused to contact the indenting roller, a CO₂ gas concentration in the gas accompanying the sheet-form body to above a CO₂ gas concentration in normal atmospheric air.

3. The indented sheet manufacturing method of claim 1, wherein
the sheet-form body is formed from a thermoplastic,
the indented sheet manufacturing method further comprising
a heating step of heating at least one surface of the sheet-form body formed from the thermoplastic, wherein
in the transfer-forming step, the control is performed by increasing, when a heated surface side or non-heated surface side of the sheet-form body is caused to contact the indenting roller, a CO₂ gas concentration in the gas accompanying the sheet-form body to above a CO₂ gas concentration in normal atmospheric air.

4. The indented sheet manufacturing method of claim 1, further comprising
a forming step of forming the sheet-form body by extruding a thermoplastic into sheet-form using an extruder, wherein
in the transfer-forming step, the control is performed by increasing, when the sheet-form body is caused to contact the indenting roller, a CO₂ gas concentration in the gas accompanying the sheet-form body to above a CO₂ gas concentration in normal atmospheric air.

5. The indented sheet manufacturing method of claim 1 further comprising:
a coating step of coating a resin solution onto the surface of the sheet-form body to form a resin solution layer; and
a step of curing the resin solution layer with the sheet-form body in a state of being wound around the indenting roller, wherein
in the transfer-forming step, the indentations on the surface of the indenting roller are transferred to the resin solution layer while performing the control to sandwich the sheet-form body between the indenting roller and at least one nip roller provided opposing the indenting roller, and to increase, when the sheet-form body is caused to contact the indenting roller, a CO₂ gas concentration in the gas accompanying the sheet-form body to above a CO₂ gas concentration in normal atmospheric air.

6. The indented sheet manufacturing method of any of claims 1 through 5, wherein in the transfer-forming step, the CO₂ gas concentration in the gas accompanying the sheet-form body is increased to above the CO₂ gas concentration in normal atmospheric air by blowing the CO₂ gas at a meeting portion of the indenting roller and the sheet-form body.

7. An indented sheet manufacturing apparatus comprising:
a dispatching unit operable to dispatch a strip-shaped flexible sheet-form body;
a running unit operable to cause the dispatched sheet-form body to run; and
a transfer-forming unit operable to cause a surface of the sheet-form body to contact a surface of an indenting roller to transfer indentations on a surface of the indenting roller to the surface of the sheet-form body,
the indented sheet manufacturing apparatus further comprising
a control unit operable to perform control to reduce a proportion of air in a gas accompanying the sheet-form body in proximity to a portion at which the sheet-form body contacts the indenting roller to below a normal atmospheric level.

8. The indented sheet manufacturing apparatus of claim 7, further comprising
a coating unit operable to coat a resin solution onto the surface of the sheet-form body to form a resin solution layer, wherein
the control unit performs the control by increasing, when a surface side of the sheet-form body, onto which the resin solution is coated is caused to contact the indenting roller, a CO₂ gas concentration in the gas accompanying the sheet-form body to above a CO₂ gas concentration in normal atmospheric air.

9. The indented sheet manufacturing apparatus of claim 7, wherein
the sheet-form body is formed from a thermoplastic,
the indented sheet manufacturing apparatus further comprising
a heating unit operable to heat at least one surface of the sheet-form body formed from the thermoplastic, wherein
the control unit performs the control by increasing, when a heated surface-side or a non-heated surface side of the sheet-form body is caused to contact the indenting roller, a CO₂ gas concentration in the gas accompanying the sheet-form body to above a CO₂ gas concentration in normal atmospheric air.

10. The indented sheet manufacturing apparatus of claim 7, further comprising
an extruder operable to form the sheet-form body by extruding a thermoplastic into sheet-form, wherein
the control unit performs the control by increasing, when the sheet-form body is caused to contact the indenting roller, a CO₂ gas concentration in the gas accompanying the sheet-form body to above a CO₂ gas concentration in normal atmospheric air.

11. The indented sheet manufacturing apparatus of claim 7 further comprising:
a coating unit operable to coat a resin solution onto the surface of the sheet-form body to form a resin solution layer; and
a resin solution curing unit operable to cure the coated resin solution with the sheet-form body in a state of being wound around the indenting roller, wherein
the control unit performs the control by increasing, when the resin solution coated side of the sheet-form body is caused to contact the indenting roller, a CO₂ gas concentration in the gas accompanying the sheet-form body to above a CO₂ gas concentration in normal atmospheric air, and
the transfer-forming unit, while winding the running sheet-form body around the rotating indenting roller, presses the sheet-form body between the indenting roller and at least one nip roller provided opposing the indenting roller and transfers the indentations on the surface of the indenting roller to the resin solution layer of the sheet-form body.

12. The indented sheet manufacturing apparatus of any of claims 7 through 11, further comprising
a gas jet emitting unit operable to blow CO₂ gas, wherein
the control is performed by using the gas jet emitting unit to blow the CO₂ gas towards a meeting portion of the indenting roller and the sheet-form body and thereby increase the CO₂ gas concentration in the gas accompanying the sheet-form body to above the CO₂ gas concentration in normal atmospheric air.

13. The indented sheet manufacturing method of claim 1 further comprising
a coating step of coating a resin solution onto the surface of the sheet-form body to form a resin solution layer, wherein
in the transfer-forming step, the indentations on the surface of the indenting roller are transferred to the resin solution layer while performing the control to press the sheet-form body between the indenting roller and at least one nip roller provided opposing the indenting roller and suck in gas from between the indenting roller and the sheet-form body.

14. The indented sheet manufacturing apparatus of claim 7, further comprising
a coating unit operable to coat a resin solution onto the surface of the sheet-form body to form a resin solution layer, wherein
the control unit is a suction unit provided on an upstream side of the indenting roller and is operable to perform the control by sucking gas from between the indenting roller and the sheet-form body, and
the transfer-forming unit presses the sheet-form body between the indenting roller and at least one nip roller provided opposing the indenting roller and transfers indentations on the surface of the indenting roller to the resin solution layer while gas is sucked from between the indenting roller and the sheet-form body by the suction unit.

15. The indented sheet manufacturing method of claim 1, wherein
the sheet-form body is formed from a thermoplastic,
the indented sheet manufacturing method further comprising
a heating step of heating at least one surface of the sheet-form body formed from the thermoplastic, wherein
in the transfer-forming step, the sheet-form body is pressed between the indenting roller and at least one nip roller provided opposing the indenting roller and indentations on the surface of the indenting roller are transferred to the surface of the sheet-form body while performing the control by sucking gas from between the indenting roller and the sheet-form body.

16. The indented sheet manufacturing apparatus of claim 7, wherein
the sheet-form body is formed from a thermoplastic,
the indented sheet manufacturing apparatus further comprising
a heating unit operable to heat at least one surface of the sheet-form body formed from the thermoplastic, wherein
the control unit is a suction unit provided on an upstream side of the indenting roller and is operable to perform the control by sucking gas from between the indenting roller and the sheet-form body, and
the sheet-form body is pressed between the indenting roller and at least one nip roller provided opposing the indenting roller and indentations on the surface of the indenting roller are transferred to the surface of the sheet-form body while performing the control by sucking gas from between the indenting roller and the sheet-form body using the suction unit.

17. The indented sheet manufacturing method of claim 1, further comprising:
a coating step of coating a resin solution onto the surface of the sheet-form body to form a resin solution layer; and
a step of curing the resin solution layer with the sheet-form body in a state of being wound around the indenting roller, wherein
in the transfer-forming step, the sheet-form body is pressed between the indenting roller and at least one nip roller provided opposing the indenting roller and indentations on the surface of the indenting roller are transferred to the resin solution layer while performing the control by sucking gas from between the indenting roller and the sheet-form body.

18. The indented sheet manufacturing apparatus of claim 7, further comprising:
a coating unit operable to coat a resin solution onto the surface of the sheet-form body to form a resin solution layer; and
a resin solution curing unit operable to cure the coated resin solution with the sheet-form body in a state of being wound around the indenting roller, wherein
the control unit is a suction unit provided on an upstream side of the indenting roller and is operable to perform the control by sucking gas from between the indenting roller and the sheet-form body, and
the sheet-form body is pressed between the indenting roller and at least one nip roller provided opposing the indenting roller and indentations on the surface of the indenting roller are transferred to the resin solution layer while performing the control by sucking gas from between the indenting roller and the sheet-form body using the suction unit.

19. The indented sheet manufacturing method of claim 5 or claim 17, wherein
the resin solution is a radiation curable resin solution, and
the resin solution layer is cured by irradiating the resin solution layer.

20. The indented sheet manufacturing apparatus of claim 11 or claim 18, wherein the resin solution is a radiation curable resin solution, and
the resin solution curing unit cures the resin solution layer by irradiating the resin solution layer.

21. The indented sheet manufacturing method of any of claim 5, claim 17 and claim 19, wherein the curing of the resin solution layer is performed by an irradiating unit provided in proximity to the indenting roller.

22. The indented sheet manufacturing apparatus of any of claim 11, claim 18 and claim 20, wherein the resin solution curing unit is an irradiating unit provided in proximity to the indenting roller.

23. The indented sheet manufacturing method of any of claims 1 through 6, claim 13, claim 15, claim 17, claim 19 and claim 21, wherein an indentation pattern formed by transfer to the sheet-form body has a pitch of 100 µm or less.

24. The indented sheet manufacturing apparatus of any of claims 7 through 12, claim 14, claim 16, claim 18, claim 20 and claim 22, wherein an indentation pattern formed by transfer to the sheet-form body has a pitch of 100 µm or less.

25. The indented sheet manufacturing method of any of claims 1 through 6, claim 13, claim 15, claim 17, claim 19, claim 21, and claim 23, wherein the indented sheet is used as an optical film.

26. The indented sheet manufacturing apparatus of any of claims 7 through 12, claim 14, claim 16, claim 18, claim 20, claim 22, and claim 24, wherein the indented sheet is used as an optical film.
